# EUROPEAN PATENT APPLICATION

(11) **EP 4 825 162 A1**
(43) Date of publication of application: **21.10.2026**
(21) Application number: 25171419.2
(22) Date of filing: 17.04.2025
(51) Int. Cl.: A01K 1/02, A01K 1/03

(54) **ANIMAL TRANSPORT CAGE**

(71) Applicant: Thule Sweden AB, 335 04 Hillerstorp (SE)
(72) Inventor: Nordangård, Markus, 33155 Värnamo (SE); Lyreborg, Micael, 521 70 Åsarp (SE); Gustafsson, Adam, 33504 Hillerstorp (SE); Jansson, Fredrik, 33504 Hillerstorp (SE)
(74) Representative: Wallentin, Lars

(57) **Abstract**

An animal transport cage includes a bottom, a top, and a frame assembly connecting the bottom to the top. A partition wall assembly separates an interior space limited by the bottom, top, and frame assembly into a first accommodating space and a second accommodating space. The partition wall assembly includes a front partition wall and a rear partition wall arranged in an overlapping manner and displaceably coupled to each other so as to be movable relative to and along each other between at least an extended configuration and a retracted configuration. The front partition wall and the rear partition wall are coupled to each other by at least one guiding arrangement such that the front partition wall and the rear partition wall are configured to be moveable along a longitudinal direction.

## Description

### FIELD

The present disclosure relates to animal transport cages or crates for keeping animals during transport. More particularly, the present invention relates to an animal transport cage suitable for use for transportation of an animal in a vehicle.

### BACKGROUND

Animal transport cages or crates are typically used for keeping animals during short periods of time and/or during transportation, for instance, in vehicles. It is often desired and, in some countries, also a requirement that animals are kept in cages during transportation inside of a vehicle, not only for the safety of the animal but also for the safety of the other occupants of the vehicle. Naturally, an animal transport cage should be designed with the animal in mind to allow it to be as calm and comfortable as possible when kept in the cage.

Additionally, animal transport cages intended for use in vehicles are subject to a number of safety requirements. Generally, an animal transport cage must withstand the forces of an accident such that the animal kept therein is to at least some extent protected and such that it cannot be ejected from the cage by the forces which may arise in an accident. Additionally, the components of the animal transport cage itself must not become detached as free flying items in a vehicle under significant acceleration/deceleration can form dangerous projectiles.

An animal transport cage should make efficient use of space in that it should provide a large interior for the animal while the exterior of the cage should take up as little space as possible, for instance in a vehicle. Additionally, an animal transport cage should be easy to use and allow easy entry and exit for the animal.

Prior art animal transport cages have been found to leave room for improvement in at least some of the foregoing areas.

### SUMMARY

The present disclosure aims at improving animal transport cages such that at least one of the drawbacks of the prior art is alleviated.

It is an object to provide an enhanced animal transport cage with improved safety over prior animal transport cages.

The object is solved by the configurations as presented in the independent claims, the aspects, and the example configurations, examples, and embodiments as described herein. Advantageous further formations may be gleaned from the dependent claims and from the below description.

According to an aspect, an animal transport cage is disclosed. The animal transport cage comprises a bottom, a top, and a frame assembly connecting the bottom to the top.

According to an embodiment, the animal transport cage may comprise a partition wall assembly for separating an interior space limited by the bottom, the top and the frame assembly in a first accommodating space and a second accommodating space.

The partition wall assembly may comprise a front partition wall and a rear partition wall arranged in an overlapping manner and displaceably coupled to each other so as to be movable relative to and along each other between at least an extended configuration and a retracted configuration.

The front partition wall and the rear partition wall may be coupled to each other by at least one guiding arrangement such that the front partition wall and the rear partition wall are configured to be movable along a longitudinal direction.

By providing a front partition wall and a rear partition wall that are connected in the aforementioned manner, it is possible to adjust the length or depth of the partition wall assembly. Accordingly, the partition wall assembly may be used in an animal transport cage with adjustable depth or length.

According to an embodiment, the front partition wall and the rear partition wall are coupled to each other by the at least one guiding arrangement such that the front partition wall and the rear partition wall are configured to be movable along a rotational direction relative to each other.

By providing such a guiding arrangement, the front partition wall and the rear partition wall may rotate relative to each other in case of a situation in which the animal transport cage is deformed. In other words, by allowing the front partition wall and the rear partition wall to rotate relative to each other, the partition wall assembly is capable of following a deformation of the animal transport cage to a certain extent without a deformation of the front partition wall and the rear partition wall. In this way, it can be prevented that the front partition wall and the rear partition wall are separated from each other.

According to an embodiment, each guiding arrangement comprises a front partition wall track provided on the front partition wall, a rear partition wall track provided on the rear partition wall, and a wall portion coupling unit slidably or shiftably received in the front partition wall track and the rear partition wall track and coupling the front partition wall and the rear partition wall to each other.

By providing a wall portion coupling unit that is movable relative to each of the front partition wall track and the rear partition wall track, the front partition wall and the rear partition wall can easily be moved relative to each other in a manner defined by the front partition wall track and the rear partition wall track.

According to an embodiment, the form or shape of the front partition wall track and the form or shape of the rear partition wall track are different. In addition or alternatively, the front partition wall track and the rear partition wall track can be formed as recesses or slots provided in the front partition wall and the rear partition wall. The recesses or slots may comprise a constant width.

According to an embodiment, each guiding arrangement may be configured such that the front partition wall track extends in depth direction of the animal transport cage or in front-to-rear direction of the front partition wall. The rear partition wall track may extend in a direction which is different from the extension direction of the front partition wall track. An inverse arrangement is also possible. In such an inverse arrangement, the rear partition wall track extends in depth direction of the animal transport cage or in front-to-rear direction of the rear partition wall. The front partition wall track may then extend in a direction which is different from the extension direction of the rear partition wall track. In general, pairings of a front partition wall track and a rear partition wall track are provided which comprise different forms or shapes for allowing an adjustment of the depth of the partition wall assembly by allowing a relative movement between the front partition wall and the rear partition wall and allowing the partition wall assembly to adapt to a deformation of the animal transport cage by allowing a relative rotation between the front partition wall and the rear partition wall. Therefore, although not explicitly described, inverse arrangements of forms and shapes of a front partition wall track and a rear partition wall track are also disclosed herein.

According to an embodiment, the front partition wall track extends at a constant height. According to another embodiment, the front partition wall track extends in parallel with a bottom floor of the bottom. According to another embodiment, the front partition wall track extends horizontally.

According to an embodiment, the front partition wall track comprises a front track end and a rear track end. The front track end and the rear track end may be arranged at the same height position or height coordinate. In addition or alternatively, the front partition wall track may be straight.

According to an embodiment, the rear partition wall track comprises a forward track end and a rearward track end. The forward track end and the rearward track end may be arranged at different height positions. The forward track end and the rearward track end may be arranged at different positions in depth direction or longitudinal direction. The forward track end may be positioned below the rearward track end. The rear partition wall track may be curved. The rear partition wall track may be arc-shaped, for example such that an arc center is located on the rear partition wall at a position below a centerline arc of the rear partition wall track. The angular span of the arc may be less than 90 degrees.

According to an embodiment, the front partition wall and the rear partition wall are coupled to each other by at least two guiding arrangements, for example by an upper guiding arrangement and by a lower guiding arrangement. According to an embodiment, the rear partition wall track of the lower guiding arrangement may extend steeper than the rear partition wall track of the upper guiding arrangement.

According to an embodiment, the wall portion coupling unit comprises two rigid support portions with support surfaces facing towards each other.

The support portions may be coupled to each other such that the support surfaces are arranged at a predetermined distance from each other. A friction reducing material and/or a noise reducing material may be applied on the support surfaces. The friction reducing material or noise reducing material may comprise a felt. In general, a material with low friction coefficient may be applied or provided on the support surfaces. In this way, noise generation can be reduced. For example, in case the support portions and the front partition wall and the rear partition wall are made of metal, a metal to metal noise can be prevented. In general, the material with low friction coefficient may be a non-water absorbing material.

The support portions may comprise a metal sheet. The support portions may be plate-shaped or disc-shaped. However, the latter shapes of the support portions are only exemplary and any suitable shape may be used for the support portions, including for example a rectangular shape or an oval shape. However, rounded or round shapes without sharp corners or sharp edges are preferred. For example, the support portions may be plate-shaped or disc-shaped with a diameter of 60 mm or 60 to 80 mm.

At least one of the support portions, for example each of the support portions, may comprise a central protrusion protruding towards the other support portion. Each central protrusion may be configured to contact the other support portion to provide the predetermined distance between the support surfaces. In some configurations, both support portions comprise a central protrusion and the central protrusions are configured to contact each other and to provide the predetermined distance between the support surfaces.

The support portions may be coupled to each other by a connecting member. The connecting member may be a rivet.

The support portions may comprise an opening for receiving the connecting member. The central protrusions may comprise the opening for receiving the connecting member. The central protrusions may comprise the opening such that support portions may be coupled to each other by the connecting member.

According to an embodiment, the support surfaces are arranged at a distance being larger than the sum of the thicknesses of the front partition wall and the rear partition wall to allow a sliding movement of the wall portion coupling unit relative to the front partition wall and the rear partition wall.

According to an embodiment, the frame assembly comprises a front portion, a rear portion, and one or more side members forming at least a portion of a side boundary of the animal transport cage and connecting the front portion and the rear portion. At least one side member, for example each side member, is coupled to the front portion and the rear portion to allow a defined relative movement between the side member and the front portion and the rear portion.

According to an embodiment, the partition wall assembly is configured such that the front partition wall and the rear partition wall are able to at least partially follow a movement of the front portion and the rear portion by moving relative to each other without deformation of the front partition wall or the rear partition wall.

According to an embodiment, each side member is a telescopic element extending between the front portion and the rear portion.

According to an embodiment, the side member and the partition wall assembly are configured to be adjustable in longitudinal direction such that the depth of the animal transport cage is adjustable by displacing the front partition wall and the rear partition wall relative to each other and by telescoping the side member.

According to an embodiment, the front partition wall and the rear partition wall are configured to be movable in the longitudinal direction relative to each other when at least one resistance altering element having at least one pre-set force state for altering a longitudinal force required for relative movement of the front and rear portions in the longitudinal direction is released.

According to an embodiment, the resistance altering element is provided on at least one side member. In addition or alternatively, the resistance altering element may be provided on the partition wall assembly.

According to an embodiment, in a use configuration, the animal transport cage is configured to be dimensionally stable as long as a force acting on the animal transport cage is lower than a predetermined force, and, when the force is higher than the predetermined force, to at least partially vary in shape through a relative movement, in particular a translatory and/or rotatory movement, of adjacent portions of the frame assembly, the bottom, the top and/or the partition wall assembly with respect to each other.

According to an embodiment, the side member is coupled to the front portion and/or the rear portion by means of the side member coupling arrangement. The side member coupling arrangement is configured to hold the side member spaced apart from and rotatable with respect to the front portion and/or the rear portion.

According to an embodiment, the side member coupling arrangement comprises a holder with an attachment portion and a coupling portion. The attachment portion is fixedly and non-movably coupled to one of the front portion and the rear portion of the side member. The coupling portion is coupled to the other one of the side member and the connecting portion pivotably about a pivot axis.

According to an embodiment, the front partition wall is coupled to the front portion of the frame assembly and the rear partition wall is coupled to the rear portion of the frame assembly by means of a partition wall coupling arrangement. The partition wall coupling arrangement is configured to hold the front partition wall spaced apart from and rotatable with respect to the front portion and/or to hold the rear partition wall spaced apart from and rotatable with respect to the rear portion. The partition wall coupling arrangement can be configured to couple the front partition wall to the front portion of the animal transport cage or of the frame assembly. The partition wall coupling arrangement can be configured to couple the rear partition wall to the rear portion of the frame assembly or of the animal transport cage. The partition wall coupling arrangement can be configured to couple the front partition wall to a front end of the bottom. The partition wall coupling arrangement can be configured to couple the rear partition wall to a rear end of the bottom.

According to an embodiment, the animal transport cage is configured such that when a force acting on the animal transport cage is higher than a predetermined force, translatory movement of the front portion and the rear portion relative to each other is obtained by overcoming the pre-set force state of the at least one resistance altering element restricting relative movement of the front portion of the frame assembly and the rear portion of the frame assembly in the longitudinal direction such that the side member is allowed to telescope and the front partition wall and the rear partition wall are allowed to displace relative to each other along the straight front partition wall track. In addition or alternatively, the animal transport cage is configured such that when a force acting on the animal transport cage is higher than a predetermined force, rotational movement of the front portion and the rear portion relative to each other is obtained by the side member and the front portion and/or the side member and the rear portion being rotatably displaceable relative to each other, and/or the front partition wall and the front portion being rotatably displaceable relative to each other and/or the rear partition wall and the rear portion being rotatably displaceable relative to each other, and/or the front partition wall and the rear partition wall being displaceable relative to each other, for example along the curved rear partition wall track.

With the above configuration, rebound motion or "bounce back" that may occur after a car crash, especially in a frontal collision, may be reduced. The rebound or "bounce back" that is created after an initial impact my be limited by guiding the motion of the animal transport cage parts relative to each other and enable them to follow a predicted path that they will most likely follow. Such a predicted path may be derived from extensive crash testing. Without the arc-shaped track, the front and rear partition walls may shortly after a collision (being exposed to a high force), break and/or detach themselves from each other. By providing the arc shaped track, a more controlled motion of the front and rear partition walls is obtained. In case of a crash in the longitudinal direction of the car (front or rear crash), the partition walls tend to move relative to one another in the direction of the arc-shaped tracks. Enabling this motion between the front and rear partition walls reduces the chance that the partition walls break or come off from each other and helps to maintain the overall structure of the animal transport cage.

According to an embodiment, the front partition wall and the rear partition wall are coupled to each other by at least one guiding arrangement such that they can be moved relative to each other, for example translatory and rotationally.

According to an embodiment, the partition wall assembly is held within the animal transport cage only at an upper end and a lower end of the partition wall assembly and/or only at an upper end and a lower end of the animal transport cage.

According to an embodiment, the partition wall assembly is held only at corner portions of the partition wall assembly.

According to an embodiment, the front partition wall is coupled to the top, for example to a front end of a front top portion. In addition or alternatively, the front partition wall may be coupled to a top member of the frame assembly front portion. The front partition wall may be coupled to a lower member of the frame assembly front portion, for example to a lowermost crossmember of the frame assembly front portion, or may be coupled to a front portion of the bottom, for example to a front end of a front bottom portion, for example an upwardly bent edge portion of the front bottom portion.

According to an embodiment, the rear partition wall is coupled to the top, for example to a rear end of a rear top portion. In addition or alternatively, the rear partition wall may be coupled to a top member of the frame assembly rear portion. The rear partition wall may be coupled to a lower member of the frame assembly rear portion, for example a lowermost crossmember of the frame assembly rear portion. The rear partition wall may be coupled to a rear portion of the bottom, for example to a rear end of a rear bottom portion, for example an upwardly bent edge portion of the bottom.

According to an embodiment, the front partition wall and the rear partition wall each comprise an upper mounting flange extending along the top and each with an upper surface facing the top. Each upper mounting flange can be provided by bent upper end portions of the front partition wall and the rear partition wall. Each mounting flange may comprise a fixation opening, for example a threaded opening.

According to an embodiment, the front partition wall comprises a front lower mounting flange extending along a front side of the front partition wall, and the rear partition wall may comprise a rear lower mounting flange that may extend along a rear side of the rear partition wall.

According to an embodiment, at least one of the front partition wall and the rear partition wall is hingedly coupled to a lower portion of the frame assembly or to the bottom by means of a coupling member, for example by means of a partition wall coupling arrangement.

According to an embodiment, at least the rear lower mounting flange is pivotably coupled to the rear partition wall. The rear lower mounting flange may be provided on a pivoting coupling member which is pivotably attached to a lower end portion of the rear partition wall at a fixation portion. The front lower mounting flange may be pivotably coupled to the front partition wall. The front lower mounting flange may be provided on a front pivoting coupling member which is pivotably attached to a lower end portion of the front partition wall at a fixation portion. The partition wall coupling arrangement may be formed by the pivoting coupling member comprising the rear lower mounting flange or the pivoting coupling member comprising the front lower mounting flange.

According to an embodiment, the partition wall assembly is mountable in at least two different positions in the frame assembly.

According to an embodiment, the partition wall assembly is configured to be arrangeable in the frame assembly such that the first accommodating space has a larger volume than the second accommodating space, the first accommodating space has a volume equal to the second accommodating space, or the first accommodating space has a smaller volume than the second accommodating space.

According to an embodiment, the partition wall assembly is mountable in the frame assembly in at least two different orientations.

According to an embodiment, a front portion of the partition wall assembly is fixable at a predetermined position on the frame assembly front portion. The front portion of the partition wall assembly may be fixable on the frame assembly front portion by means of a front fixation bracket. The animal transport cage may be configured such that the front portion of the partition wall assembly is fixable only at a single predetermined position.

According to an embodiment, a rear portion of the partition wall assembly is fixable at or in at least two different mounting positions, for example at three different mounting positions, for example on the frame assembly rear portion and/or by means of a rear fixation bracket. The mounting positions may be provided at different width positions in width direction of the animal transport cage and may be provided by fixation openings, for example in a rear fixation bracket for attaching the rear portion of the partition wall assembly to a frame assembly rear portion.

According to an embodiment, the frame assembly connects the top and the bottom of the animal transport cage and defines an interior space together with the top and the bottom. As described before, a partition wall assembly may be provided for separating the interior space into a first accommodating space and a second accommodating space.

According to an embodiment, the animal transport cage comprises an access door for opening and closing an access opening to the interior space. The access door is pivotable between an open position in which access to the interior space is granted, and a closed position in which the access opening is blocked by the access door. The access door comprises an access door locking mechanism configured to lock the access door in the closed position. The access door locking mechanism is releasable by applying a pulling force on an operating portion in an opening direction of the access door.

According to an embodiment, the operating portion comprises an operating handle for unlocking the access door. The operating handle may be configured pivotable about a handle pivot axis which is substantially parallel to a door hinge axis and/or runs substantially in parallel to a main extension plane of the access door.

According to an embodiment, the access door locking mechanism comprises a locking member movable between a locking position in which it protrudes from the access door and can engage with the frame assembly, and an unlocking position in which the locking member is retracted and cannot engage with the frame assembly. The locking member may be movable along a straight path, for example in a direction perpendicular to a pivot axis of the access door.

According to an embodiment, the operating handle is operatively coupled to the locking member such that the locking member can be moved from the locking position to the unlocking position by pulling the operating handle, and such that the locking member is free to move from the locking position to the unlocking position independent of a position of the operating handle. This allows closing the door without having to operate the operating handle.

According to an embodiment, the locking member is biased towards the locking position by means of an urging member, for example a spring biasing means, such as a spring or coil spring. The operating handle may comprise a force application portion and the locking member may comprise a force receiving surface for receiving a force from the force application portion. The force application portion may be provided on a protrusion protruding into a recess formed in the locking member. The force receiving surface may be provided by a wall limiting the recess on one side.

According to an embodiment, the frame assembly comprises a front portion and a rear portion.

According to an embodiment, the animal transport cage comprises at least one animal evacuation hatch configured to allow extraction of the animal in case of an emergency. The animal evacuation hatch may comprise a latching arrangement being configured to secure the evacuation hatch in relation to the frame assembly such that the evacuation hatch can be locked in place automatically by the latching arrangement when brought into a predetermined position in relation to the frame assembly and can be easily released in case of an emergency.

According to an embodiment, the latching arrangement comprises a first latching arrangement and a second latching arrangement arranged at opposite lateral sides of the evacuation hatch.

According to an embodiment, the latching arrangement may comprise an upper latching arrangement which is arranged at an upper end portion of the evacuation hatch. For example, the animal transport cage may comprise a third latching arrangement arranged at an upper end portion of the evacuation hatch.

According to an embodiment, at least one latching arrangement is configured to engage with the rear portion of the frame assembly.

According to an embodiment, the upper latching arrangement or third latching arrangement is configured to engage at a position of a rear fixation bracket that is configured to connect an upper portion of a rear upper frame member of the frame assembly rear portion with a partition wall assembly. The rear fixation bracket may be configured with abutment sections protruding into the frame assembly rear portion and forming abutments for the evacuation hatch. The rear fixation bracket may define a receiving section for the third latching arrangement between the abutment sections. The receiving section may be provided by a recess formed in the rear fixation bracket. For example, the recess may be configured such that the latching arrangement, in particular a latching member of the latching arrangement, may contact the frame assembly.

According to an embodiment, the animal transport cage comprises a lower panel arranged below the animal evacuation hatch and coupled to the frame assembly. A reinforcing member may be attached to the lower panel.

According to an embodiment, the lower panel comprises an upper edge portion configured to be coupled to the animal evacuation hatch. The reinforcing member may be arranged on top of or below the upper edge portion. The reinforcing member may be attached to an upper side of the upper edge portion or a lower side of the upper edge portion.

According to an embodiment, the upper edge portion comprises a folded end portion being folded along at least one fold line. The reinforcing member may be attached to the folded end portion. The reinforcing member may be attached to the folded end portion via fixation openings provided at a distance from the fold line.

According to an embodiment, the reinforcing member may be at least partially formed corresponding to the folded end portion. The reinforcing member may be formed by bending. The reinforcing member may be formed such that portions of the folded end portion on opposite sides of one fold line of the at least one fold line are reinforced by the reinforcing member.

According to an embodiment, the folded end portion is folded in the same direction at two fold lines. The reinforcing member may be accommodated in an accommodating space created by the folded end portion.

According to an embodiment, the evacuation hatch comprises a lower edge. The lower edge may be configured to be engageable with the upper edge portion of the lower panel. The lower edge may comprise hooks and the upper edge portion may comprise openings for receiving the hooks. The evacuation hatch may be configured to be hooked into the upper edge portion in a manner defining a hinge.

According to an embodiment, the folded end portion comprises two straight sections folded so as to extend at an angle with respect to each other. The reinforcing member may be correspondingly formed to comprise two straight sections that may be connected to the straight sections of the folded end portion.

According to an embodiment, the reinforcing member is a metal sheet or a metal plate.

According to an embodiment, the animal evacuation hatch comprises a latching arrangement being configured to secure the evacuation hatch in relation to the frame assembly such that the evacuation hatch can be locked in place automatically by the latching arrangement when brought into a predetermined position in relation to the frame assembly.

According to an embodiment, at least one of the front partition wall and the rear partition wall is hingedly coupled to a lower end of the frame assembly or to the bottom by means of a coupling member, for example a frame assembly coupling member.

According to an embodiment, the coupling member or frame assembly coupling member is coupled to a lower portion of the partition wall assembly, for example to a lower rear portion of the rear partition wall, pivotable about a coupling member pivot axis, and is fixedly and non-pivotably coupled to the lower portion of the frame assembly or to the bottom, wherein the coupling member pivot axis may extend in width direction of the animal transport cage and may extend in parallel with the bottom. In addition or alternatively, the coupling member may comprise a fixation flange extending in width direction of the animal transport cage, for example in parallel to the lower portion of the frame assembly or in parallel to a wall portion of the bottom, for example in parallel to an edge portion of a rear bottom portion, wherein the edge portion may be a portion of the bottom that is folded upwards.

According to an embodiment, the animal transport cage further comprises at least one glide member fixedly attached to a lower end of the front partition wall or the rear partition wall and configured to lower friction between the front partition wall and the rear partition wall and/or between the front partition wall or the rear partition wall and the bottom.

According to an embodiment, the glide member is configured as an edge protection member provided on a lower forward end of the rear partition wall or on a lower rear end of the front partition wall.

According to an embodiment, the glide member is configured as a bracket extending over lower edge portions of the front partition wall and of the rear partition wall. The glide member may comprise a first recess for accommodating a lower edge portion of the rear partition wall and a second recess for accommodating a lower edge portion of the front partition wall. A wall portion between the first recess and the second recess may act as a spacer and/or friction reduction portion between the rear partition wall and the front partition wall. The glide member may be configured as a front protection cover for the rear partition wall.

According to an embodiment, the glide member comprises a contact portion for contacting the bottom, in particular for contacting a front bottom portion. The contact portion may be provided by a protrusion on the glide member. The contact portion may have a reduced width compared to adjacent portions of the glide member. The contact portion may be an elongated protrusion extending in parallel with the front partition wall and the rear partition wall.

According to an embodiment, the glide member is configured as a rear protection cover for the front partition wall. The glide member may be attached only to the front partition wall. The glide member may comprise only a single recess for accommodating the lower rear end of the front partition wall. A sidewall of the glide member may be arranged between the front partition wall and the rear partition wall and may act as a spacer and/or friction reduction portion between the rear partition wall and the front partition wall.

Other features of the present invention will be apparent from consideration of the information contained above as well as in or in combination with the following detailed description, drawings and claims. The present invention is illustrated by way of example, and not by way of limitation, in the figures of the accompanying drawings.

### BRIEF DESCRIPTION OF THE DRAWINGS

The accompanying drawings, which are incorporated herein and form part of the specification, illustrate possible configurations of embodiments and, together with the description, further serve to explain the principles of the embodiments and to enable a person skilled in the art to make and use the embodiments. It is noted that the same or similar parts in the different figures are denoted by the same reference signs.
Fig. 1 shows a perspective illustration of an animal transport cage.
Fig. 2 shows the animal transport cage of Fig. 1 without a top.
Fig. 3 shows a rear side of the animal transport cage.
Fig. 4 shows a perspective illustration of the animal transport cage when viewed from the rear side.
Fig. 5 shows a perspective illustration of a partition wall assembly.
Fig. 6 shows a perspective illustration of the partition wall assembly of Fig. 5 as seen from the opposite side.
Fig. 7 shows a perspective illustration of details of the partition wall assembly arranged within the animal transport cage.
Fig. 8 shows details of a rear upper portion of the animal transport cage.
Fig. 9 shows a sectional view of an access door locking mechanism in locking configuration.
Fig. 10 shows a sectional view of the access door locking mechanism in unlocking configuration.
Fig. 11 shows an exploded view of an upper portion of a rear lower panel of the animal transport cage.
Fig. 12 shows a side view of an upper edge portion of the lower panel.
Fig. 13 shows the entire lower panel of Fig. 11.
Fig. 14 shows a side view of an upper edge portion of the lower panel together with a lower edge of an evacuation hatch connected to the upper edge portion.
Fig. 15 shows the evacuation hatch and the lower panel of the animal transport cage in perspective illustration.
Fig. 16 shows a perspective illustration of a possible configuration for supporting the partition wall assembly on the bottom of the animal transport cage.
Fig. 17 shows a wall portion coupling unit.
Fig. 18 shows a lower portion of a partition wall assembly with details on how a front partition wall and a rear partition wall of a partition wall assembly may be supported against each other and on the bottom.
Fig. 19 shows the lower portion of Fig. 18 from the opposite side.
Fig. 20 shows a perspective illustration of a glide member.
Fig. 21 shows a perspective illustration of another glide member.
Fig. 22 shows details of a possible connection between frame members of a frame assembly of an animal transport cage using a specific side member coupling arrangement.
Fig. 23 shows details of a possible partition wall coupling arrangement for mounting the partition wall assembly within the animal transport cage.

All figures are only schematic depictions of exemplary embodiments in which, in particular, distances and dimensional correlations are not presented to scale.

The features and advantages of embodiments will become more apparent from the detailed description as given below when taken in conjunction with the drawings, in which like reference signs identify corresponding elements throughout. In the drawings like reference numbers generally indicate identical, functionally similar and/or structurally similar elements.

### DETAILED DESCRIPTION

The following detailed description is merely exemplary in nature and is not intended to limit application and uses. Furthermore, there is no intention to be bound by any theory presented in the preceding background or summary or the following detailed description.

Embodiments of the present disclosure are described in detail with reference to embodiments thereof as illustrated in the accompanying drawings. References to "one embodiment," "an embodiment," "some embodiments," etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Spatially relative terms, such as "beneath," "below," "lower," "above," "on," "upper," "opposite" and the like, may be used herein for ease of description to describe one element or feature's relationship to another element(s) or feature(s) as illustrated in the figures. The spatially relative terms are intended to encompass different orientations of the device in use or in operation in addition to the orientation depicted in the figures. The apparatus may be otherwise oriented (e.g., rotated 90 degrees or at other orientations) and the spatially relative descriptors used herein may likewise be interpreted accordingly.

Terms describing parts or members as "releasable" and/or "detachable" relate to configurations in which the parts or members are at least decouplable from another part or member without destroying one of the cooperating parts or members. These terms may also describe configurations in which the parts and members may be decoupled or disengaged without tools (tool-free). Terms describing parts or members as "positively locked" and/or "positively coupled" relate to configurations in which the parts or members are in positive engagement, positive mechanical engagement or interlocked.

Some aspects of the present disclosure are defined below. These aspects may form exemplary embodiments of the present disclosure and may be combined with features mentioned in other portions of this specification.

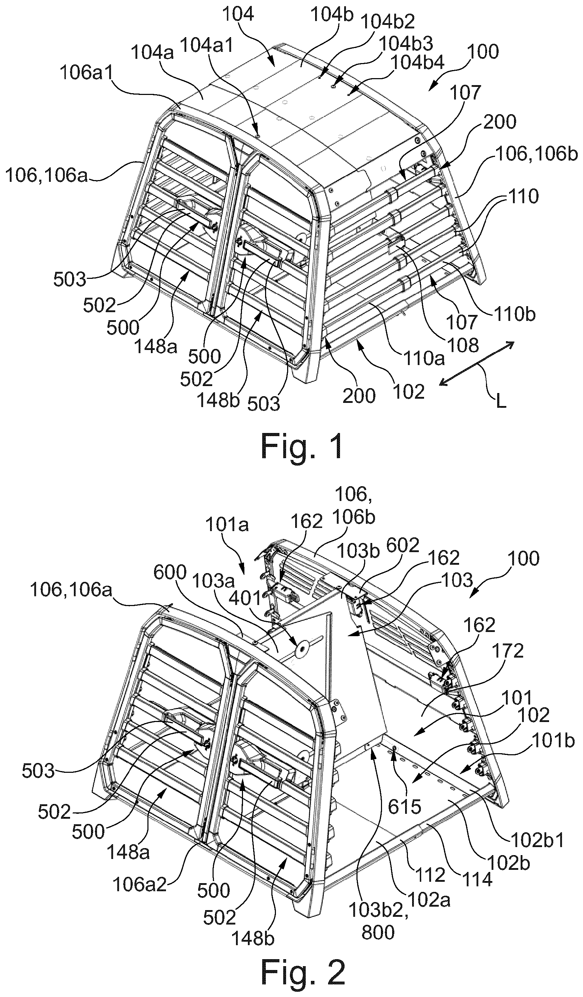

Fig. 1 shows an animal transport cage 100 according to an embodiment. The animal transport cage 100 is suitable for use for transportation of an animal in a vehicle. The animal transport cage 100 is ideally used for keeping the animal in a confined space during transportation in or on a vehicle, such as in a trunk of a car. The animal transport cage 100 may feature a telescopic design that allows its length or depth to be adjusted to accommodate different animal sizes and to adapt to different vehicle spaces.

The animal transport cage 100 comprises a bottom 102. The bottom 102 forms the structure in the animal transport cage 100 on which the animal rests as it is kept in the cage. The bottom 102 may be provided with a carpet or cover for instance in the form of a silicone or rubber mat. The bottom 102 may be formed by a suitable material such as a polymeric, a metallic or a composite material. The bottom 102 comprises a front bottom portion 102a and a rear bottom portion 102b. The front bottom portion 102a and the rear bottom portion 102b together provide a bottom floor 102c for supporting the animal. The front bottom portion 102a may at each lateral side thereof comprise a longitudinal bottom track 112 in which a corresponding bottom track member 114 on the rear bottom portion 102b is configured to be arranged and slide. In such an embodiment, the rear bottom portion 102b is preferably configured to be arranged at least partially underneath the front bottom portion 102a.

The animal transport cage 100 comprises a top 104. The top 104 of the animal transport cage 100 forms an upper restriction for the animal kept in the cage 100 or upper boundary of the cage. The top 104 may be formed by a suitable material such as a polymeric, a metallic or a composite material. The top 104 may comprise a front top portion 104a and a rear top portion 104b. Like the bottom 102, front top portion 104a and the rear top portion 104b can be telescopically moveable to adjust the cage length.

The animal transport cage 100 further comprises a frame assembly 106 connecting the bottom 102 to the top 104. The frame assembly 106 comprises a connecting portion 106a, 106b connecting the bottom 102 to the top 104. The connecting portion may be a front portion 106a or a rear portion 106b of the frame assembly 106. The front portion 106a and the rear portion 106b may be reciprocally moveable relative one another along a longitudinal direction L of the animal transport cage 100, allowing the length of the animal transport cage 100 to be adapted. Length in the present disclosure is thus defined as measured along the longitudinal direction L. The animal transport cage 100 is intended to be arranged in a vehicle such that the longitudinal direction L is arranged along the travelling direction of the vehicle.

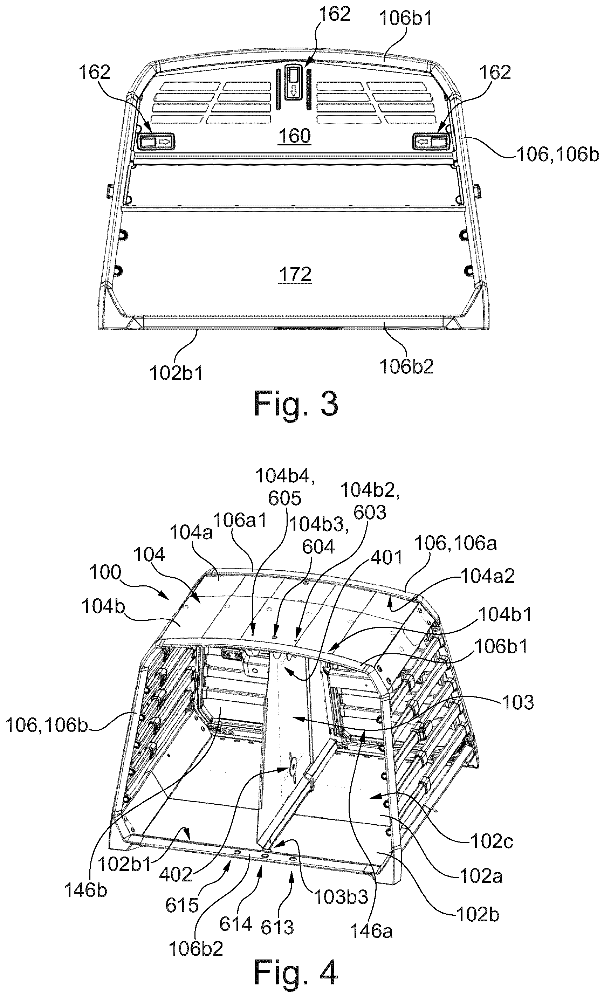

The frame assembly 106 comprises one or more side members 107. The side members 107 form at least a portion of a side boundary of the animal transport cage 100. The side members 107 connect the front portion 106a and the rear portion 106b. Each side member 107 is coupled to the front portion 106a and the rear portion 106b. The side members 107 may comprise telescopic elements 110. The animal transport cage 100 may as is shown in Figs. 1 and 4 be provided with a plurality of side members 107 with telescopic elements 110. Each telescopic element 110 extends between the front portion 106a and the rear portion 106b of the frame arrangement 106, functioning both as a side enclosure of the animal transport cage 100 and as a guide for the relative movement of the front portion 106a and rear portion 106b. Each telescopic element 110 may comprise a front telescopic portion 110a and a rear telescopic portion 110b being configured to be reciprocally moveable with the front and rear portions 106a, 106b respectively and telescopically engaged with each other. The front telescopic portion 110a is connected to the front portion 106a. The rear telescopic portion 110b is connected to the rear portion 106b.

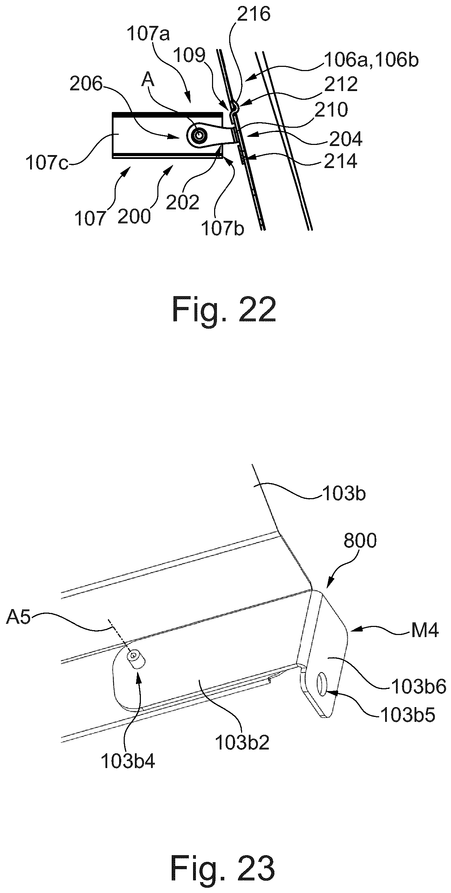

At least one side member 107, for example each side member 107, is coupled to the front portion 106a and/or the rear portion 106b by means of a side member coupling arrangement 200. An exemplary configuration of the side member coupling arrangement 200 is shown in Fig. 22. In general, the function of the side member coupling arrangement 200 is to couple the ends of the side members 107 to the adjacent connecting portions of the frame assembly 106 connecting the top 104 and the bottom 102 (for example to the front portion 106a or to the rear portion 106b) such that a relative movement between side member and connecting portion is possible. In the configuration shown in Fig. 22, the side member coupling arrangement 200 is configured to couple an end portion 107a of the side member 107 to the front portion 106a or to the rear portion 106b such that a relative movement between the side member 107 and the rear portion 106b is possible.

The side member coupling arrangement 200 may comprise a holder 202 having an attachment portion 204 and a coupling portion 206. The attachment portion 204 is configured to be fixedly and non-moveably coupled to a connecting portion 106a, 106b of the frame assembly 106. As mentioned before, the connecting portion may be the front portion 106a or the rear portion 106b of the frame assembly. The attachment portion 204 comprises a base portion 210 extending along a main extension direction of the connecting portion 106a, 106b and at least partially contacting an outer surface of the connecting portion.

The base portion 210 comprises at least one fixation section 212, 214 for attaching the holder 202 to the connecting portion 106a, 106b. In a preferred embodiment, a first fixation section 212 comprises a hook portion 216 configured to be inserted into a corresponding opening 109 of the connecting portion 106a, 106b. A second fixation section 214 comprises a recess for receiving a coupling member, such as a screw, bolt, or rivet, for securing the attachment portion 204 to the connecting portion 106a, 106b.

The coupling portion 206 extends from the base portion 210 and is configured to be pivotably coupled to the side member 107 about a predetermined pivot axis A. The side member 107 may comprise a hollow end portion 107a into which the coupling portion 206 is configured to be inserted. In a direction cross to the main extension direction of the side member 107, the coupling portion 206 comprises a cross dimension that is smaller than an inner cross dimension of the side member 107, thereby allowing relative rotational movement between the coupling portion 206 and the side member 107 about the pivot axis A.

The coupling portion 206 comprises a contact surface configured to be in surface contact with an inner surface 107c of the side member 107. This contact generates a predetermined static friction between the coupling portion 206 and the side member 107. The contact surface may be flat and preferably extends perpendicular to the pivot axis A. In one embodiment, the contact surface extends fully about the pivot axis A and comprises a dimension in the main extension direction of the side member 107 which is larger than its dimension in a direction cross to the main extension direction of the side member 107.

The side member coupling arrangement 200 is configured to hold the side member 107 spaced apart from and rotatable with respect to the connecting portion 106a, 106b. In a normal use configuration, the animal transport cage 100 is dimensionally stable as long as a force acting on the animal transport cage 100 is lower than a predetermined threshold force. When the force exceeds the predetermined threshold force, the static friction between the contact surface and the inner surface 107c is overcome, allowing a controlled relative movement between the side member 107 and the connecting portion 106a, 106b.

The side member 107 is coupled to the connecting portion 106a, 106b such that an end surface portion 107b of the side member faces the connecting portion 106a, 106b in the main extension direction of the side member. This configuration maintains a predetermined spacing between the side member 107 and the connecting portion 106a, 106b while permitting controlled rotational movement when required.

A cover portion (not shown) may be provided for covering a coupling section at which the side member 107 is coupled with the connecting portion 106a, 106b. The cover portion may comprise a sleeve portion for receiving the end portion 107a of the side member 107 and a supporting portion configured to contact the connecting portion 106a, 106b. The cover portion may be configured to hold the side member 107 at a predetermined orientation with respect to the connecting portion 106a, 106b and may provide a predetermined resistance against the defined movement between the side member 107 and the connecting portion 106a, 106b, thereby adding rigidity to the frame assembly 106.

The side member coupling arrangement 200 functions to prevent the detachment of the side member 107 from the frame assembly 106 in the event of an accident or impact. By allowing a controlled rotational movement between the side member 107 and the connecting portion 106a, 106b (for example the front portion 106a and the rear portion 106b) when subjected to forces exceeding the predetermined threshold, the side member coupling arrangement 200 absorbs energy and reduces peak forces that would otherwise cause frame components to break or become dangerous projectiles within the vehicle.

In conjunction with other safety features of the animal transport cage 100 the side member coupling arrangement 200 contributes to a deformable yet structurally sound cage design that protects both the animal and the vehicle occupants in case of an accident while maintaining dimensional stability during normal use.

The side member coupling arrangement 200 may be integrally formed, for example by cutting and bending a metal sheet, to provide a robust and reliable connection between the side member 107 and the frame assembly 106 of the animal transport cage 100.

As best seen in Fig. 1, the animal transport cage 100 may comprise at least one resistance altering element 108. The resistance altering element 108 is provided on at least one side member 107. The resistance altering element 108 may be configured to control the force required to move the front and rear portions 106a, 106b relative to each other. It can be set to different force states (high and low) and may use a clamp mechanism to control the movement. The at least one resistance altering element 108 may have at least one pre-set force state for altering a longitudinal force required for relative movement of the front portion 106a and rear portion 106b in the longitudinal direction. The resistance altering element 108 may be set to at least a high force state in which the longitudinal force required for relative movement of the front and rear portion is high and a low force state in which the longitudinal force required for relative movement of the front and rear portion is low relative to the high force state. In a modification, the resistance altering element 108 may be provided on another portion of the animal transport cage 100 in which front and rear elements of the cage are movable relative to each other for adjusting the depth of the animal transport cage.

The frame assembly 106 defines an interior space 101 together with the top 104 and the bottom 102. The animal transport cage 100 may comprise a partition wall assembly 103 designed to separate the interior space 101 of the cage into distinct sections (see Fig. 2). The interior space 101 is defined by the bottom 102, the top 104, and the frame assembly 106. The partition wall assembly 103 divides this interior space 101 into a first accommodating space 101a and a second accommodating space 101b.

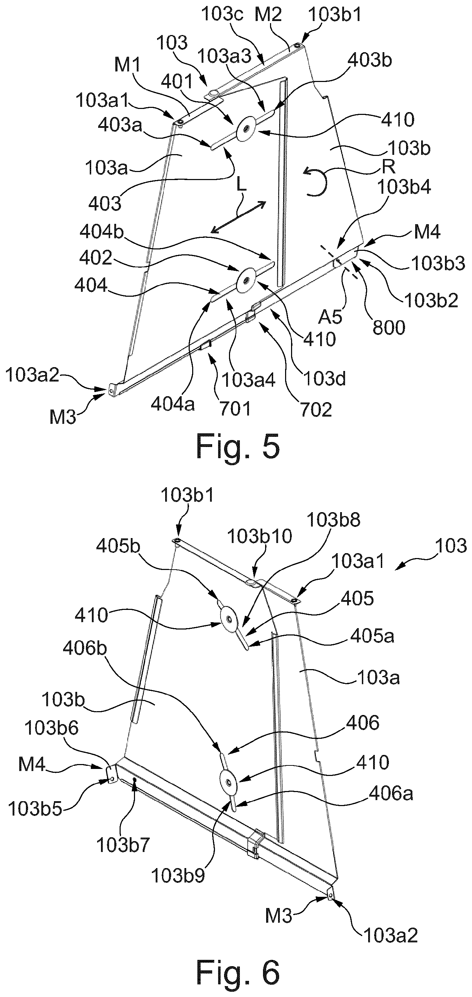

A possible configuration of the partition wall assembly is shown in Figs. 5, 6 and 7. The partition wall assembly 103 comprises a front partition wall 103a and a rear partition wall 103b. These partition walls are arranged in an overlapping manner and are displaceably coupled to each other, enabling them to move relative to and along each other. This configuration allows the partition wall assembly 103 to transition between at least an extended configuration and a retracted configuration, wherein in the extended configuration the extension of the partition wall assembly 103 in longitudinal direction is larger. In a modification, the resistance altering element 108 is optionally or additionally provided on the partition frame assembly 103 although this is not shown in the figures. The partition wall assembly 103 is configured such that the front partition wall 103a and the rear partition wall 103b are able to at least partially follow a movement of the front portion 106a and the rear portion 106b. This is achieved by the front partition wall 103a and the rear partition wall 103b being movable relative to each other. This movement may occur without deformation of the front partition wall 103a or the rear partition wall 103b.

The side member 107 and the partition wall assembly 103 are configured to be adjustable in longitudinal direction L. This adjustment allows the depth of the animal transport cage 100 to be adjustable. The depth is adjusted by displacing the front partition wall 103a and the rear partition wall 103b relative to each other. The depth is also adjusted by telescoping the side member 107. The front partition wall 103a and the rear partition wall 103b are configured to be movable in the longitudinal direction L relative to each other. This movement may occur when the at least one resistance altering element 108 is released.

The front partition wall 103a and the rear partition wall 103b are coupled to each other by at least one guiding arrangement 401, 402. This guiding arrangement 401, 402 ensures that the partition walls can move smoothly along the longitudinal direction L of the animal transport cage 100. The longitudinal direction L may be aligned with the travelling direction of the vehicle when the cage is installed.

The guiding arrangement 401, 402 may include rails, tracks, or other mechanisms that facilitate the smooth and controlled movement of the partition walls.

Furthermore, the front partition wall 103a and the rear partition wall 103b are designed to offer an additional degree of flexibility through rotational movement. The front partition wall 103a and the rear partition wall 103b are coupled to each other by the at least one guiding arrangement 401, 402 such that the front partition wall 103a and the rear partition wall 103b are configured to be moveable along a rotational direction R to each other. The guiding arrangement 401, 402 connects the front partition wall 103a and the rear partition wall 103b in a way that allows them to rotate relative to each other.

Each guiding arrangement 401, 402 comprises a front partition wall track 403, 404, for example an upper front partition wall sliding track 103a3 and a lower front partition wall sliding track 103a4. The front partition wall track 403, 404 is provided on the front partition wall 103a. Each guiding arrangement 401, 402 also comprises a rear partition wall track 405, 406, for example an upper rear partition wall sliding track 103b8 and a lower rear partition wall sliding track 103b9. The rear partition wall track 405, 406 is provided on the rear partition wall 103b. Additionally, each guiding arrangement 401, 402 comprises a wall portion coupling unit 410. The wall portion coupling unit 410 is slidably received in the front partition wall track 403, 404 and the rear partition wall track 405, 406. The wall portion coupling unit 410 couples the front partition wall 103a and the rear partition wall 103b to each other. This design may ensure that the partition walls can move relative to each other in a controlled and stable manner, enhancing the flexibility and functionality of the partition wall assembly 103.

The form of the front partition wall track 403, 404 and the form of the rear partition wall track 405, 406 are different. Additionally or alternatively, the front partition wall track 403, 404 and the rear partition wall track 405, 406 are formed as recesses or slots provided in the front partition wall 103a and the rear partition wall 103b. For example, these slots have a constant width.

In each guiding arrangement 401, 402, the front partition wall track 403, 404 extends in the depth direction of the animal transport cage 100. It may extend in the front-to-rear direction of the front partition wall 103a at a constant height. Additionally or alternatively, the extension occurs in parallel with the bottom floor 102c of the bottom 102. Additionally or alternatively, the extension may be horizontal. The rear partition wall track 405, 406 extends in a direction which is different from the extension direction of the front partition wall track.

The front partition wall track 403, 404 comprises a front track end 403a, 404a and a rear track end 403b, 404b. These ends are arranged at the same height position. Additionally or alternatively, the front partition wall track 403, 404 is straight.

The rear partition wall track 405, 406 comprises a forward track end 405a, 406a and a rearward track end 405b, 406b. The forward track end 405a, 406a and the rearward track end 405b, 406b are arranged at different height positions. Additionally or alternatively, the forward track end 405a, 406a and the rearward track end 405b, 406b are arranged at different positions in the depth direction. Additionally or alternatively, the forward track end 405a, 406a is positioned below the rearward track end 405b, 406b. Additionally or alternatively, the rear partition wall track 405, 406 is curved. For example, it is arc-shaped with a predetermined centerline arc radius. For example, the arc is shaped such that an arc center is located below the centerline arc and on the rear partition wall 103b.

The front partition wall 103a and the rear partition wall 103b may be coupled to each other by at least two guiding arrangements 401, 402, for example an upper guiding arrangement 401 and a lower guiding arrangement 402.

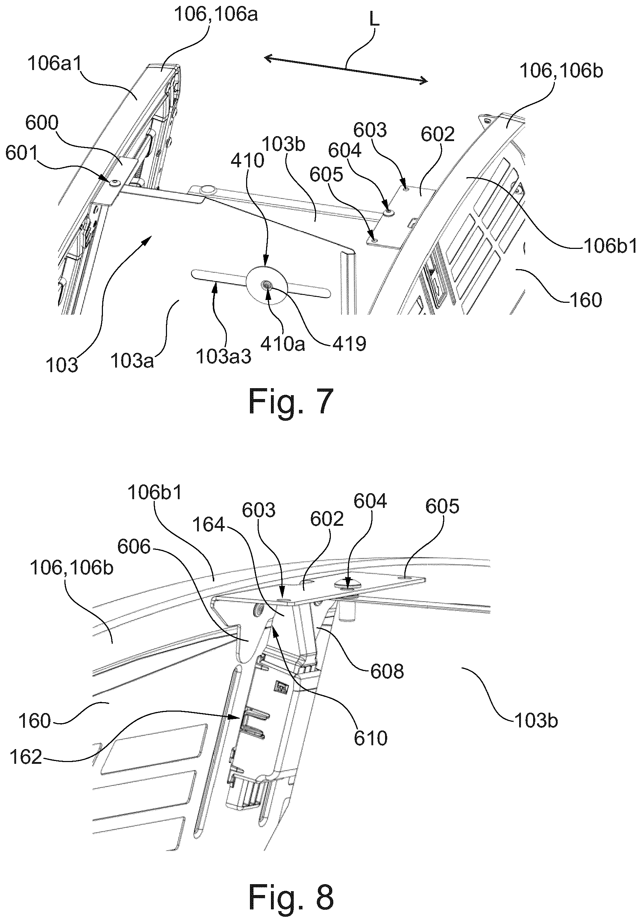

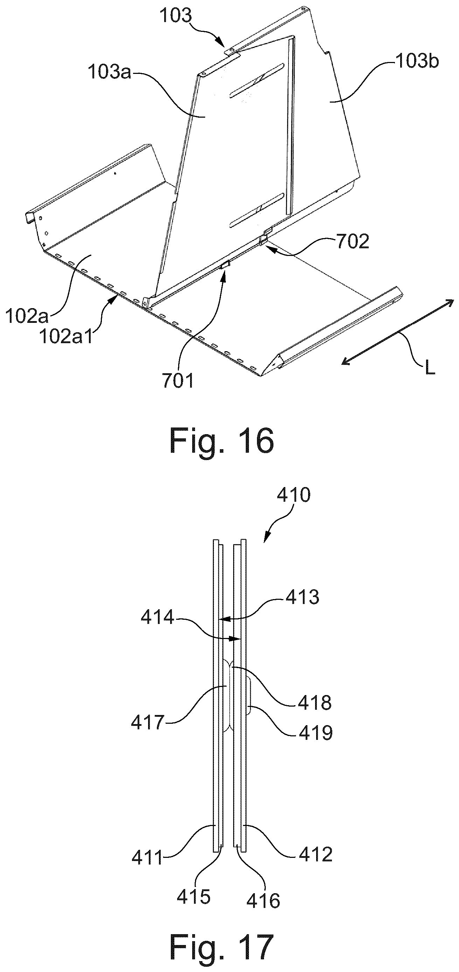

As best seen in Figs. 7 and 17, the wall portion coupling unit 410 may comprise two rigid support portions 411, 412. These support portions 411, 412 may have support surfaces 413, 414 facing towards each other. The support portions 411, 412 are coupled to each other such that the support surfaces 413, 414 are arranged at a predetermined distance from each other. A friction reducing material 415, 416 and/or a noise reducing material, for example a felt, may be applied on the support surfaces 413, 414. The support portions 411, 412 may comprise a metal sheet. The support portions 411, 412 may be plate-shaped or disc-shaped. For example, each support portion may have a central protrusion 417, 418 protruding towards the other support portion. These central protrusions 417, 418 are configured to contact each other and to provide the predetermined distance between the support surfaces 413, 414. The support portions 411, 412 may be coupled to each other by a connecting member 419, for example a rivet. The central protrusions 417, 418 may comprise an opening 410a such that support portions 411, 412 may be coupled to each other by the connecting member 419.

The support surfaces 413, 414 may be arranged at a distance being larger than the sum of the thicknesses of the front partition wall 103a and the rear partition wall 103b. This arrangement allows a sliding movement of the wall portion coupling unit 410 relative to the front partition wall 103a and the rear partition wall 103b.

The front partition wall 103a is coupled to the front portion 106a. The rear partition wall 103b is coupled to the rear portion 106b. This coupling can be done by means of a partition wall coupling arrangement 800 (see Fig. 23) and/or by a front fixation bracket 600 (see Fig. 7) and/or a rear fixation bracket 602 (see Fig. 8) and/or mounting flanges M1, M2, M3, M4 (see Fig. 5) provided on the partition wall assembly 103. Each partition wall coupling arrangement 800 may be configured to couple a lower longitudinal end portion of a partition wall with the front portion 106a or the rear portion 106b. Each fixation bracket 601, 602 may be configured to be used for coupling upper longitudinal end portions of a partition wall with the front portion 106a or the rear portion 106b. The mounting flanges M1, M2, M3, M4 may comprise fixation openings 103b5, for example threaded openings, and may be configured to extend such that they can be fixed to the front portion 106a or the rear portion 106b or to a longitudinal end portion of the bottom 102. For example, all connections may be provided such that a user does not have to mount anything from a lower side of the bottom 102.

The partition wall coupling arrangement 800 can be configured to hold the front partition wall 103a spaced apart from and rotatable with respect to the front portion 106a. The partition wall coupling arrangement 800 can be configured to hold the rear partition wall 103b spaced apart from and rotatable with respect to the rear portion 106b. In Fig. 23, an enlarged view of a possible configuration of a partition wall coupling arrangement 800 is shown. In Fig. 23, the partition wall coupling arrangement is configured to couple the rear partition wall 103b to the rear portion 106b or to a rear portion of the bottom 102. At least one of the front partition wall 103a and the rear partition wall 103b is hingedly coupled to a lower portion of the frame assembly 106 or to the bottom 102 by means of the partition wall coupling arrangement 800. The partition wall coupling arrangement 800 may comprise a coupling member 103b2.

The coupling member 103b2 is coupled to a lower portion of the partition wall assembly 103. For example, the coupling member 103b2 is coupled to a lower rear portion of the rear partition wall 103b as best seen in Fig. 23. The coupling member 103b2 is pivotable about a coupling member pivot axis A5. The coupling member 103b2 is fixedly and non-pivotably coupled to the lower portion of the frame assembly 106 or to the bottom 102. The coupling member pivot axis A5 may extend in the width direction of the animal transport cage 100. The coupling member pivot axis A5 may extend in parallel with the bottom 102.

The coupling member 103b2 comprises a fixation flange 103b6 which may define mounting flange M4. This fixation flange 103b6 extends in the width direction of the animal transport cage 100. In particular, the fixation flange 103b6 extends in parallel to the lower portion of the frame assembly 106. Alternatively, the fixation flange 103b6 extends in parallel to a wall portion of the bottom 102. For example, the fixation flange 103b6 extends in parallel to an edge portion 102b1 of a rear bottom portion 102b. This edge portion 102b1 may be a portion of the bottom 102 that is folded upwards.

At least the rear lower mounting flange 103b6 is pivotably coupled to the rear partition wall 103b. The rear lower mounting flange 103b6 may be provided on the coupling member 103b2. The coupling member 103b2 is pivotably attached to a lower end portion of the rear partition wall 103b at a fixation portion 103b4. An attachment bracket mounting opening 103b7 is provided in a lower end portion of the rear partition wall 103b. The coupling member 103b2 may be provided by an attachment bracket 103b3 on the mounting flange 103b6 and the fixation portion 103b4 are integrally formed on a bent metal sheet.

When a force acting on the animal transport cage 100 is higher than a predetermined force, translatory movement of the front portion 106a and the rear portion 106b relative to each other is obtained by overcoming the pre-set force state of the at least one resistance altering element 108. This resistance altering element 108 restricts relative movement of the front portion 106a and the rear portion 106b in the longitudinal direction L. This allows the side member 107 to telescope. This also allows the front partition wall 103a and the rear partition wall 103b to displace relative to each other along the straight front partition wall track 403, 404.

Rotational movement of the front portion 106a and the rear portion 106b relative to each other is obtained by the side member 107 and the front portion 106a and/or the side member 107 and the rear portion 106b being rotatably displaceable relative to each other. Rotational movement is also obtained by the front partition wall 103a and the front portion 106a being rotatably displaceable relative to each other. Rotational movement is also obtained by the rear partition wall 103b and the rear portion 106b being rotatably displaceable relative to each other. Rotational movement is also obtained by the front partition wall 103a and the rear partition wall 103b being displaceable relative to each other, for example along the curved rear partition wall track 405, 406.

The partition wall assembly 103 is held within the animal transport cage 100 only at an upper end 103c and a lower end 103d of the partition wall assembly 103. The partition wall assembly 103 is also held only at an upper end and a lower end of the animal transport cage 100. The partition wall assembly 103 can be held only at corner portions of the partition wall assembly 103. A sliding portion 103b10 may be provided on the upper end 103c between fixation positions of the partition wall assembly 103 to allow sliding of a partition wall relative to the top 104 and to reduce friction between the top 104 and the partition walls.

The front partition wall 103a may be coupled to the top 104, in particular to a front end 104a2 of a front top portion 104a, for example via a front fixation bracket 600 (see Fig. 7) having a fixation opening 601, and/or via a first top opening 104a1. The front partition wall 103a is coupled to a top member 106a1 of the frame assembly front portion 106a by means of the front fixation bracket 600. The front partition wall 103a is also coupled to a lower member 106a2, in particular lowermost crossmember, of the frame assembly front portion 106a. The front partition wall 103a is also coupled to a front portion 102a of the bottom 102, in particular a front end 102a1 of a front bottom portion 102a.

The rear partition wall 103b is coupled to the top 104, in particular to a rear end 104b1 of a rear top portion 104b. The rear partition wall 103b is also coupled to a top member 106b1 of the frame assembly rear portion 106b. The rear partition wall 103b is also coupled to a lower member 106b2, in particular lowermost crossmember, of the frame assembly rear portion 106b. The rear partition wall 103b is also coupled to a rear portion of the bottom 102, in particular a rear end 102b1 of a rear bottom portion 102b, for example, an upwardly bent edge portion of the bottom 102.

The front partition wall 103a and the rear partition wall 103b each comprise an upper mounting flange M1, M2 and a lower mounting flange M3, M4. The upper mounting flange M1, M2 extends along the top 104 at their upper ends. Each upper mounting flange M1, M2 has an upper surface facing the top 104. The upper mounting flanges M1, M2 may be provided by bent upper end portions of the front partition wall 103a and the rear partition wall 103b. Each mounting flange M1, M2 may comprise a fixation opening 103a1, 103b1, for example a threaded opening.

The front partition wall 103a comprises a front lower mounting flange 103a2 as one of the lower mounting flanges M3, M4. This front lower mounting flange 103a2 extends along a front side of the front partition wall 103a. The rear partition wall 103b comprises a rear lower mounting flange 103b6 as one of the lower mounting flanges M3, M4. This rear lower mounting flange 103b6 may extend along a rear side of the rear partition wall 103b.

The partition wall assembly 103 may be mountable in at least two different positions in the frame assembly 106. The partition wall assembly 103 is configured to be arrangeable in the frame assembly 106 such that the first accommodating space 101a has a larger volume than the second accommodating space 101b. The partition wall assembly 103 is also configured to be arrangeable such that the first accommodating space 101a has a volume equal to the second accommodating space 101b. The partition wall assembly 103 is also configured to be arrangeable such that the first accommodating space 101a has a smaller volume than the second accommodating space 101b.

The partition wall assembly 103 is mountable in the frame assembly 106 in at least two different orientations. A front portion of the partition wall assembly 103 is fixable at a predetermined position on the frame assembly front portion 106a. This fixation can be done, for example, by means of a front fixation bracket 600. This predetermined position can be a single predetermined position.

A rear portion of the partition wall assembly 103 is fixable at or in at least two different mounting positions, for example, at three different mounting positions. These mounting positions are provided at different width positions in the width direction of the animal transport cage 100. The mounting positions may be provided by fixation openings 603, 604, 605, for example in a rear fixation bracket 602 for attaching the rear portion of the partition wall assembly 103 to a frame assembly rear portion 106b, and/or by fixation openings 104b2, 104b3, 104b4 provided in the top 104. Corresponding lower fixation openings 613, 614, 615 (see Fig. 2 and Fig. 4) may be provided in a lower portion of the animal transport cage 100, for example in the rear end 102b1 of the rear bottom portion 102b or on a lower member 106b2 of the rear portion 106b of the frame assembly 106.

In general, in a use configuration, the animal transport cage 100 is configured to be dimensionally stable. This stability is maintained as long as a force acting on the animal transport cage 100 is lower than a predetermined force. When the force is higher than the predetermined force, the animal transport cage 100 is configured to at least partially vary in shape. This variation in shape occurs through a relative movement of adjacent portions of the frame assembly 106, the bottom 102, the top 104, and/or the partition wall assembly 103 with respect to each other. This relative movement includes a translatory and/or rotatory movement.

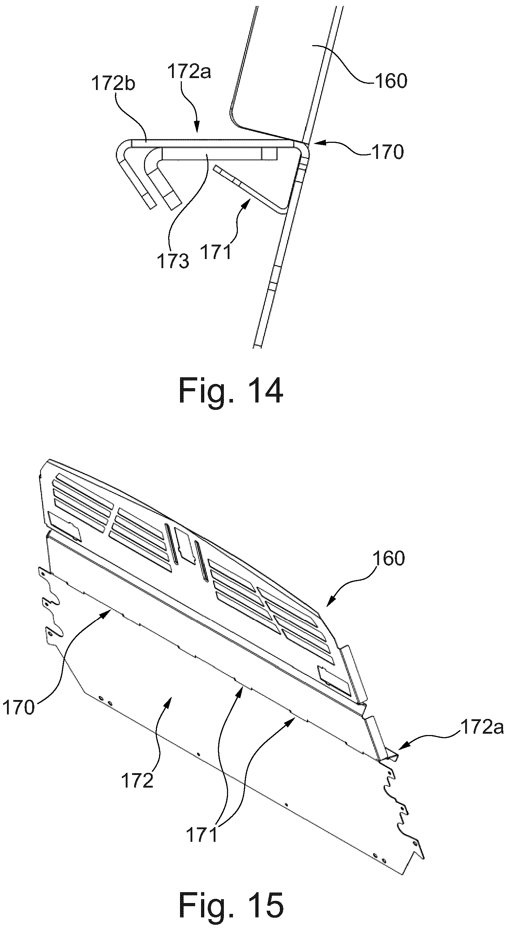

As best seen in Figs. 3 and 15, the animal transport cage 100 may comprise at least one animal evacuation hatch 160 configured to allow extraction of the animal kept in the cage 100 in case of emergency. The evacuation hatch 160 may be arranged in the rear portion 106b of the animal transport cage 100 as shown in Fig. 3. The evacuation hatch 160 is preferably removeable such that an evacuation opening is made accessible to a user for evacuation of an animal in the cage 100.

As best seen in Figs. 2 and 3, the animal evacuation hatch 160 comprises a latching arrangement 162. This latching arrangement 162 is configured to secure the evacuation hatch 160 in relation to the frame assembly 106, for example such that the evacuation hatch 106 can be locked in place automatically by the latching arrangement 162 when brought into a predetermined position in relation to the frame assembly 106. Accordingly, the latching arrangement 162 may be configured to allow the evacuation hatch 160 to be locked in place automatically. This locking may occur when the evacuation hatch 160 is brought into a predetermined position in relation to the frame assembly 106. The latching arrangement 162 also allows the evacuation hatch 160 to be easily released in case of an emergency. A latching arrangement 162 may be provided at least at each lateral side of the evacuation hatch 160. As shown in the figures, at least one latching arrangement 162 may be provided at an upper side of the evacuation hatch 160. Each latching arrangement 162 may comprise a latching pin 164 (see Fig. 8).

The latching arrangement 162 comprises a first latching arrangement 162.1 and a second latching arrangement 162.2. These are arranged at opposite lateral sides of the evacuation hatch 160. The animal transport cage 100 further comprises a third latching arrangement 162.3. This third latching arrangement 162.3 is arranged at an upper end portion of the evacuation hatch 160.

At least one latching arrangement 162 is configured to engage with the rear portion 106b of the frame assembly 106. The third latching arrangement 162.3 may engage at a position of the rear fixation bracket 602. As mentioned, this rear fixation bracket 602 may be configured to connect an upper portion of a rear upper frame member or top member 106b1 of the frame assembly rear portion 106b with a partition wall assembly 103. The rear fixation bracket 602 may optionally comprise the fixation openings 603, 604, 605. As said, these openings may be provided for fixing a rear upper portion of a partition wall assembly 103 to the frame assembly rear portion 106b at different positions. The rear fixation bracket 602 may be configured with abutment sections 606, 608. These abutment sections protrude into the frame assembly rear portion 106b. The abutment sections form abutments for the evacuation hatch 160. The rear fixation bracket 602 defines a receiving section 610 for the third latching arrangement 162.3. This receiving section 610 is located between the abutment sections 606, 608. The receiving section 610 may be provided by a recess formed in the rear fixation bracket 602. This configuration allows the latching arrangement 162.3, in particular a latching member 164 of the latching arrangement 162.3, to contact the frame assembly 106.

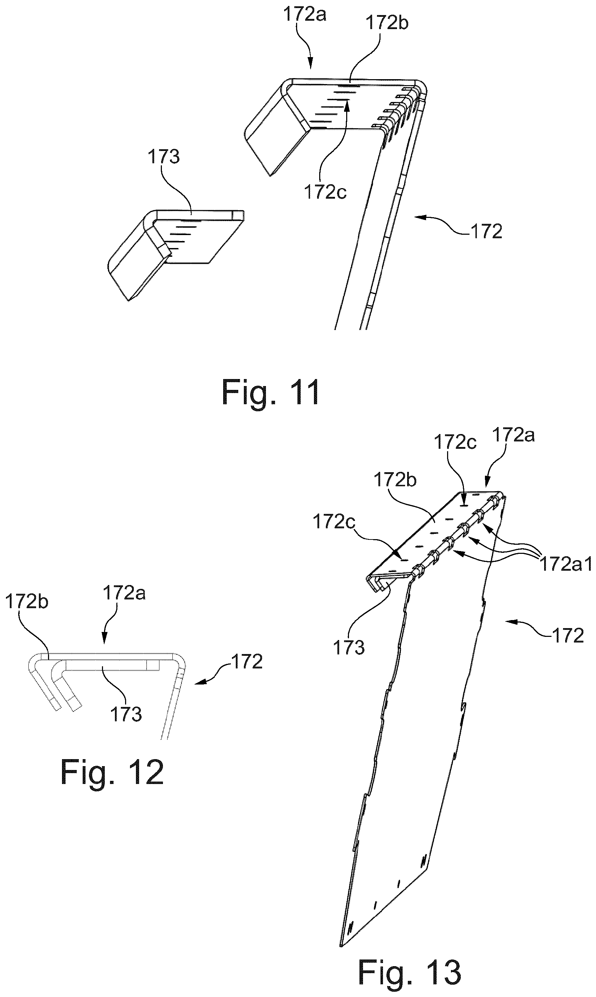

The animal transport cage 100 may further comprise a lower panel 172, as best seen in Figs. 2, 3, 13 and 15. The lower panel 172 may be a structural element located in the rear portion 106b of the animal transport cage 100. The lower panel 172 is coupled to the frame assembly 106. The lower panel 172 may for example be positioned in the lower section of the rear portion 106b of the animal transport cage 100 below the evacuation hatch 160. The lower panel 172 provides a support structure for the evacuation hatch 160. The lower panel 172 comprises an upper edge portion 172a. This upper edge portion 172a is configured to be coupled to the animal evacuation hatch 160.

The evacuation hatch 160 comprises a lower edge 170. This lower edge 170 is configured to be engageable with the upper edge portion 172a. The lower edge 170 may comprise hooks 171. The upper edge portion 172a may comprise openings 172a1 for receiving the hooks 171.

A reinforcing member 173 may be attached to the lower panel 172. The reinforcing member 173 may be a metal sheet or metal plate. The reinforcing member 173 may be arranged on top or below the upper edge portion 172a. The reinforcing member 173 may be attached to an upper side of the upper edge portion 172a or a lower side of the upper edge portion 172a. The upper edge portion 172a comprises a folded end portion 172b. This folded end portion 172b is folded along at least one fold line. The reinforcing member 173 is attached to the folded end portion 172b. This attachment is, for example, via fixation openings 172c provided at a distance from the fold line. The reinforcing member 173 may be at least partially formed corresponding to the folded end portion 172b. For example, the reinforcing member 173 may be bent. This formation is such that portions of the folded end portion 172b on opposite sides of one fold line of the at least one fold line are reinforced by the reinforcing member 173. The folded end portion 172b is folded in the same direction at two fold lines. The reinforcing member 173 is accommodated in an accommodating space created by the folded end portion 172b.

The folded end portion 172b may comprise two straight sections. These straight sections are folded so as to extend at an angle with respect to each other. The reinforcing member 173 is correspondingly formed to comprise two straight sections. These straight sections may be connected to the straight sections of the folded end portion 172b.

As best seen in Figs. 1 and 2, the animal transport cage 100 may comprise an access door 148a, 148b, for example two access doors. Each access door 148a, 148b is for opening and closing an access opening 146a, 146b to the interior space. A first (left) access door 148 is configured to grant access to the first (left) accommodating space 101a and a second (right) access door 148b is configured to grant access to the second (right) accommodating space 101b. Each access door 148a, 148b is pivotable between an open position and a closed position. In the open position, access to the interior space is granted. In the closed position, the access opening is blocked by the access door 148a, 148b.

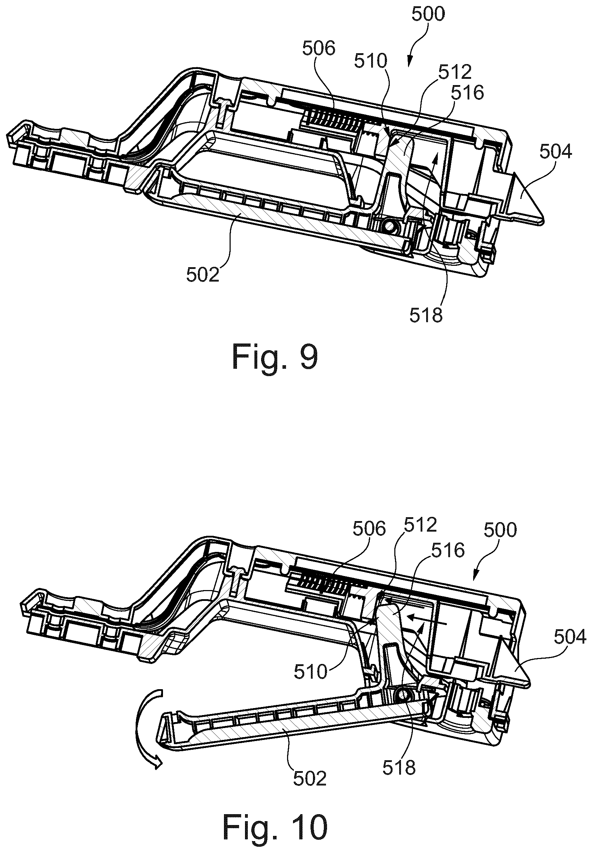

The access door 148a, 148b comprises an access door locking mechanism 500. An exemplary configuration will be described with reference to Figs. 9 and 10. The access door locking mechanism 500 is configured to lock the access door 148a, 148b in the closed position. The access door locking mechanism 500 may be releasable by applying a pulling force on an operating portion 502. This pulling force is applied in the opening direction of the access door 148a, 148b.

The operating portion 502 may comprise an operating handle 503. The operating handle 503 is for unlocking the access door. The operating handle 503 is configured to be pivotable about a handle pivot axis. This handle pivot axis is substantially parallel to a door hinge axis. The handle pivot axis runs substantially in parallel to a main extension plane of the access door 148a, 148b.

The access door locking mechanism 500 comprises a locking member 504. The locking member 504 is movable between a locking position and an unlocking position. In the locking position, the locking member 504 protrudes from the access door 148a, 148b. In this position, it can engage with the frame assembly 106. In the unlocking position, the locking member 504 is retracted. In this position, it cannot engage with the frame assembly 106. The locking member 504 may be movable along a straight path. This path may extend in a direction perpendicular to a pivot axis of the access door 148a, 148b.

The operating handle 502 is operatively coupled to the locking member 504. This coupling allows the locking member 504 to be moved from the locking position to the unlocking position by pulling the operating handle 502. This coupling also allows the locking member 504 to move from the locking position to the unlocking position independent of the position of the operating handle 502.

The locking member 504 is biased towards the locking position. This bias is achieved by means of an urging member 506. An example of an urging member is a spring biasing means. The operating handle 502 comprises a force application portion 510. The locking member 504 comprises a force receiving surface 512. This force receiving surface 512 is for receiving a force from the force application portion 510. The force application portion 510 is provided on a protrusion 516. This protrusion 516 protrudes into a recess 518 formed in the locking member 504. The force receiving surface 512 is provided by a wall. This wall limits the recess 518 on one side. Identical access door locking mechanisms 500 may be used on both access doors owing to the fact that even an inverse arrangement on the door does not change the operating direction of the operating handle 502.

As best seen in Figs. 16 and 18 to 21, the animal transport cage 100 may comprise at least one glide member 701, 702. The glide member 701, 702 may be fixedly attached to a lower end of the front partition wall 103a or to a lower end of the rear partition wall 103b. The glide member 701, 702 is configured to lower friction between the front partition wall 103a and the rear partition wall 103b. The glide member 701, 702 is also configured to lower friction between the front partition wall 103a or the rear partition wall 103b and the bottom 102.

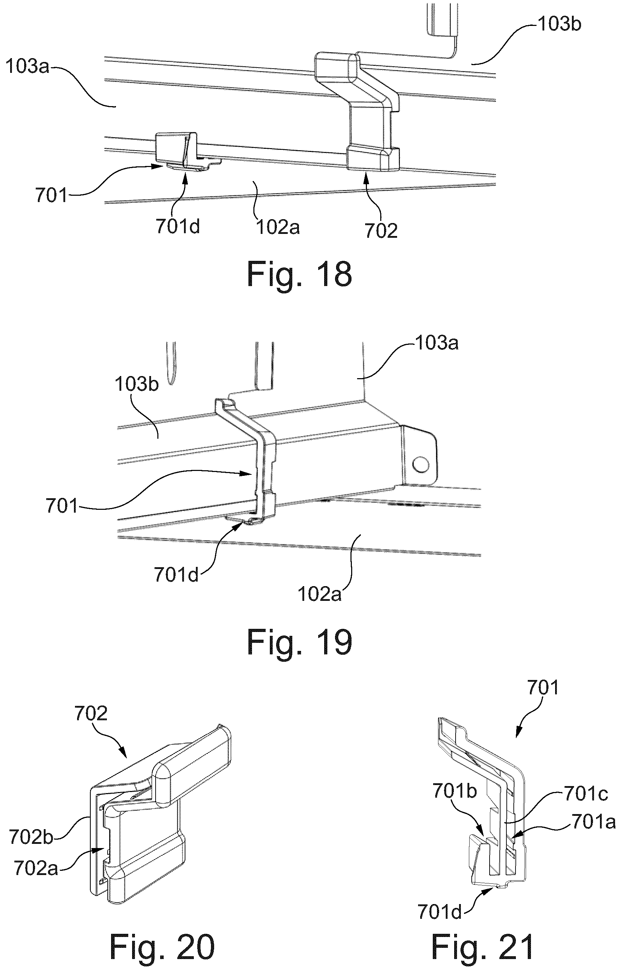

The glide member 701, 702 may be configured as an edge protection member. This edge protection member is provided on a lower forward end of the rear partition wall 103b (see Fig. 19) or on a lower rear end of the front partition wall 103a (see Fig. 18).

The glide member 701 may be configured as a bracket, as for example shown in Fig. 21. The bracket extends over lower edge portions of the front partition wall 103a and of the rear partition wall 103b. The glide member 701 may comprise a first recess 701a. This first recess 701a is for accommodating a lower edge portion of the rear partition wall 103b. The glide member 701 may comprise a second recess 701b. This second recess 701b is for accommodating a lower edge portion of the front partition wall 103a. A wall portion 701c is provided between the first recess 701a and the second recess 701b. This wall portion 701c acts as a spacer and/or friction reduction portion between the rear partition wall 103b and the front partition wall 103a. The glide member 701 may be configured as a front protection cover for the rear partition wall 103b.

The glide member 701 may comprise a contact portion 701d. This contact portion 701d is for contacting the bottom 102. In particular, the contact portion 701d is for contacting a front bottom portion 102a. The contact portion 701d may be provided by a protrusion on the glide member 701. The contact portion 701d may have a reduced width compared to adjacent portions of the glide member 701. The contact portion 701d may be an elongated protrusion. This elongated protrusion may extend in parallel with the front partition wall 103a and the rear partition wall 103b.

The glide member 702 may be configured as a rear protection cover for the front partition wall 103a, as best seen in Fig. 20 and in Fig. 18). The glide member 702 is attached only to the front partition wall 103a. The glide member 702 comprises only a single recess 702a. This single recess 702a is configured to accommodate the lower rear end of the front partition wall 103a. A sidewall 702b of the glide member 702 is arranged between the front partition wall 103a and the rear partition wall 103b. This sidewall 702b acts as a spacer and/or friction reduction portion between the rear partition wall 103b and the front partition wall 103a.

### ASPECTS

In the following, different configurations and/or different aspects are represented in itemized structure in addition to the subject matter of claim 1 and the dependent claims and in addition to the explanations and configurations given in the introductory portion of this specification. It is to be noted that the below specific feature combinations are not intended to limit the disclosure to such specific feature combinations. By contrast, the below feature combinations merely provide different examples having improved capabilities. Features and embodiments as defined in the itemized configurations may be combined with other features and embodiments of other itemized configurations, as well as with one or more of the features of configurations described in the summary section and the detailed description section.
Aspect A1: Animal transport cage (100), comprising
   a bottom (102),
   a top (104),
   a frame assembly (106) connecting the bottom (102) to the top (104), and
   a partition wall assembly (103) for separating an interior space (101) limited by said bottom (102), said top (104) and said frame assembly (106) in a first accommodating space (101a) and a second accommodating space (101b),
   said partition wall assembly (103) comprising a front partition wall (103a) and a rear partition wall (103b) arranged in an overlapping manner and displaceably coupled to each other so as to be movable relative to and along each other between at least an extended configuration and a retracted configuration,
   wherein said front partition wall (103a) and said rear partition wall (103b) are coupled to each other by at least one guiding arrangement (401, 402) such that the front partition wall
   (103a) and the rear partition wall (103b) are configured to be moveable along a longitudinal direction (L).
Aspect A2: Animal transport cage (100) according to aspect A1,
   wherein said front partition wall (103a) and said rear partition wall (103b) are coupled to each other by said at least one guiding arrangement (401, 402) such that the front partition wall (103a) and the rear partition wall (103b) are configured to be moveable along a rotational direction (R) to each other.
Aspect A3: Animal transport cage (100) according to aspect A1 or A2,
   wherein each guiding arrangement (401, 402) comprises a front partition wall track (403, 404) provided on said front partition wall (103a), a rear partition wall track (405, 406) provided on said rear partition wall (103b), and a wall portion coupling unit (410) slidably received in said front partition wall track (403, 404) and said rear partition wall track (405, 406) and coupling said front partition wall (103a) and said rear partition wall (103b) to each other.
Aspect A4: Animal transport cage (100) according to aspect A3,
   wherein the form of said front partition wall track (403, 404) and the form of said rear partition wall track (405, 406) are different, and/or
   wherein said front partition wall track (403, 404) and said rear partition wall track (405, 406) are formed as recesses or slots provided in said front partition wall (103a) and said rear partition wall (103b), for example as slots having a constant width.
Aspect A5: Animal transport cage (100) according to aspect A4,
   wherein in each guiding arrangement (401, 402) said front partition wall track (403, 404) extends in depth direction of said animal transport cage (100) or in front-to-rear direction of the front partition wall (103a), in particular only at a constant height and/or in parallel with a bottom floor (102c) of said bottom (102) and/or horizontally, and
   wherein said rear partition wall track (405, 406) extends in a direction which is different from the extension direction of the front partition wall track.
Aspect A6: Animal transport cage (100) according to one of aspects A3 to A5,
   wherein said front partition wall track (403, 404) comprises a front track end (403a, 404a) and a rear track end (403b, 404b) arranged at the same height position, and/or
   wherein said front partition wall track (403, 404) is straight,
Aspect A7: Animal transport cage (100) according to one of aspects A3 to A6,
   wherein said rear partition wall track (405, 406) comprises a forward track end (405a, 406a) and a rearward track end (405b, 406b),
   wherein said forward track end (405a, 406a) and said rearward track end (405b, 406b) are arranged at different height positions, and/or
   wherein said forward track end (405a, 406a) and said rearward track end (405b, 406b) are arranged at different positions in depth direction, and/or
   wherein said forward track end (405a, 406a) is positioned below said rearward track end (405b, 406b), and/or
   wherein said rear partition wall track (405, 406) is curved, for example arc-shaped with a predetermined centerline arc radius, for example such that an arc center is located below the centerline arc on said rear partition wall (103b).
Aspect A8: Animal transport cage (100) according to any of the preceding aspects,
   wherein said front partition wall (103a) and said rear partition wall (103b) are coupled to each other by at least two guiding arrangements (401, 402).
Aspect A9: Animal transport cage (100) according to one of aspects A3 to A8,
   wherein said wall portion coupling unit (410) comprises two rigid support portions (411, 412) with support surfaces (413, 414) facing towards each other,
   wherein said support portions (411, 412) are coupled to each other such that said support surfaces (413, 414) are arranged at a predetermined distance from each other,
   wherein a friction reducing material (415, 416) and/or a noise reducing material, for example a felt, may be applied on said support surfaces (413, 414),
   wherein said support portions (411, 412) may comprise a metal sheet,
   wherein said support portions (411, 412) may be plate-shaped or disc-shaped, for example each with a central protrusion (417, 418) protruding towards the other support portion, said central protrusions (417, 418) being configured to contact each other and to provide said predetermined distance between said support surfaces (413, 414),
   wherein said support portions (411, 412) may be coupled to each other by a connecting member (419), for example a rivet,
   wherein said central protrusions (417, 418) may comprise an opening (410a) such that support portions (411, 412) may be coupled to each other by said connecting member (419).
Aspect A10: Animal transport cage (100) according to aspect A9,
   wherein said support surfaces (413, 414) are arranged at a distance being larger than the sum of the thicknesses of said front partition wall (103a) and said rear partition wall (103b) to allow a sliding movement of said wall portion coupling unit (410) relative to said front partition wall (103a) and said rear partition wall (103b).
Aspect A11: Animal transport cage (100) according to one of aspects A1 to A10,
   wherein said frame assembly (106) comprises a front portion (106a), a rear portion (106b), and one or more side members (107) forming at least a portion of a side boundary of said animal transport cage (100) and connecting said front portion (106a) and said rear portion (106b),
   wherein each side member (107) is coupled to said front portion (106a) and said rear portion (106b) to allow a defined relative movement between said side member (107) and said front portion (106a) and said rear portion (106b).
Aspect A12: Animal transport cage (100) according to aspect A11,
   wherein said partition wall assembly (103) is configured such that said front partition wall (103a) and said rear partition wall (103b) are able to at least partially follow a movement of said front portion (106a) and said rear portion (106b) by moving relative to each other without deformation of said front partition wall (103a) or said rear partition wall (103b).
Aspect A13: Animal transport cage (100) according to one of aspects A11 and A12,
   wherein each side member (107) is a telescopic element extending between the front portion (106a) and the rear portion (106b).
Aspect A14: Animal transport cage (100) according to one of aspects A11 to A13,
   wherein the side member (107) and the partition wall assembly (103) are configured to be adjustable in longitudinal direction (L) such that the depth of the animal transport cage (100) is adjustable by displacing the front partition wall (103a) and the rear partition wall (103b) relative to each other and by telescoping the side member (107).
Aspect A15: Animal transport cage (100) according to one of aspects A11 to **A14,**
   wherein the front partition wall (103a) and the rear partition wall (103b) are configured to be movable in the longitudinal direction (L) relative to each other when at least one resistance altering element (108) having at least one pre-set force state for altering a longitudinal force required for relative movement of the front (106a) and rear portion (106b) in the longitudinal direction (L) is released.
Aspect A16: Animal transport cage (100) according to aspect A15,
   wherein the resistance altering element (108) is provided on at least one side member (107) and/or on said partition wall assembly (103).
Aspect A17: Animal transport cage (100) according to one of aspects A11 to A16,
   wherein, in a use configuration, said animal transport cage (100) is configured to be dimensionally stable as long as a force acting on the animal transport cage (100) is lower than a predetermined force, and, when said force is higher than said predetermined force, to at least partially vary in shape through a relative movement, in particular a translatory and/or rotatory movement, of adjacent portions of said frame assembly (106), said bottom (102), said top (104) and/or said partition wall assembly (103) with respect to each other.
Aspect A18: Animal transport cage (100) according to one of aspects A11 to A17,
   wherein said side member (107) is coupled to the front portion and/or the rear portion (106a, 106b) by means of a side member coupling arrangement (200) configured to hold said side member (107) spaced apart from and rotatable with respect to the front portion (106a) and/or the rear portion (106b).
Aspect A19: Animal transport cage (100) according to aspect A18,
   wherein said side member coupling arrangement (200) comprises a holder (202) with an attachment portion (204) fixedly and non-moveably coupled to one of said front portion and said rear portion (106a, 106b) of said side member (107), and with a coupling portion (206) pivotably coupled to the other one of said side member (107) or said connecting portion (106a, 106b) about a pivot axis (A).
Aspect A20: Animal transport cage (100) according to one of aspects A11 to A19,
   wherein said front partition wall (103a) is coupled to the bottom (102), for example to a flange provided in a front bottom portion (102a), or is coupled to the front portion (106a) of the frame assembly (106), and the rear partition wall (103b) is coupled to the bottom (102), for example to a flange provided in a rear bottom portion (102b), or to the rear portion (106b) of the frame assembly (106) by means of a partition wall coupling arrangement (800) configured to hold the front partition wall (103a) spaced apart from and rotatable with respect to the front portion (106a) and/or the rear partition wall (103b) spaced apart from and rotatable with respect to the rear portion (106b).
Aspect A21: Animal transport cage (100) according to one of aspects A15 to A20, wherein when a force acting on the animal transport cage (100) is higher than a predetermined force,
   translatory movement of the front portion (106a) and the rear portion (106b) relative to each other is obtained by:
      - overcoming the pre-set force state of the at least one resistance altering element (108) restricting relative movement of the front (106a) and the rear portion (106b) in the longitudinal direction (L) such that the side member (107) is allowed to telescope and the front partition wall (103a) and the rear partition wall (103b) are allowed to displace relative to each other along the straight front partition wall track (403, 404),
         and/or
   rotational movement of the front portion (106a) and the rear portion (106b) relative to each other is obtained by:
      - the side member (107) and the front portion (106a) and/or the side member (107) and the rear portion (106b) being rotatably displaceable relative to each other, and/or
      - the front partition wall (103a) and the front portion (106a) being rotatably displaceable relative to each other and/or the rear partition wall (103b) and the rear portion (106b) being rotatably displaceable relative to each other, and/or
      - the front partition wall (103a) and the rear partition wall (103b) being displaceable relative to each other along the curved rear partition wall track (405, 406).
Aspect A22: Animal transport cage (100), for example the animal transport cage according to one of aspects A1 to A21, said animal transport cage comprising
   a bottom (102),
   a top (104),
   a frame assembly (106) connecting the bottom to the top, and
   a partition wall assembly (103) for separating an interior space (101) limited by said bottom (102), said top (104) and said frame assembly (106) in a first accommodating space (101a) and a second accommodating space (101b),
   said partition wall assembly (103) comprising a front partition wall (103a) and a rear partition wall (103b) arranged in an overlapping manner and displaceably coupled to each other so as to be movable relative to and along each other between an extended configuration and a retracted configuration,
   wherein said front partition wall (103a) and said rear partition wall (103b) are coupled to each other by at least one guiding arrangement (401, 402) such that they can be moved relative to each other, for example translatory and rotationally,
   wherein said partition wall assembly (103) is held within said animal transport cage (100) only at an upper end (103c) and a lower end (103d) of said partition wall assembly (103) and/or only at an upper end and a lower end of said animal transport cage (100).
Aspect A23: Animal transport cage (100) according to aspect A22,
   wherein said partition wall assembly (103) is held only at corner portions of said partition wall assembly (103), and/or
   wherein said front partition wall (103a) is coupled to said top (104), in particular to a front end (104a2) of a front top portion (104a), and/or to a top member (106a1) of said frame assembly front portion (106a), and to a lower member (106a2), in particular lowermost crossmember, of said frame assembly front portion (106a) or to a front portion (102a) of said bottom (102), in particular a front end (102a1) of a front bottom portion (102a) or to a flange on the front bottom portion (102a), which flange may be provided by an upwardly bent edge portion of said front bottom portion (102a), for example at the front end (102a1),
   wherein said rear partition wall (103b) is coupled to said top (104), in particular to a rear end (104b1) of a rear top portion (104b), and/or to a top member (106b1) of said frame assembly rear portion (106b), and to a lower member (106b2), in particular lowermost crossmember, of said frame assembly rear portion (106b) or to a rear portion of said bottom
   (102), in particular a rear end (102b1) of a rear bottom portion (102b) or to a flange on the rear bottom portion (102b), which flange may be provided by an upwardly bent edge portion of said rear bottom portion (102b), for example at the rear end (102b1).
Aspect A24: Animal transport cage (100) according to aspect A22 or aspect A23,
   wherein said front partition wall (103a) and said rear partition wall (103b) each comprise an upper mounting flange (M1, M2) extending along said top (104) at their upper ends and each with an upper surface facing said top (104),
   wherein said upper mounting flanges (M1, M2) may be provided by bent upper end portions of said front partition wall (103a) and said rear partition wall (103b),
   wherein each mounting flange (M1, M2) may comprise a fixation opening (103a1, 103b1), for example a threaded opening.
Aspect A25: Animal transport cage (100) according to one of aspects A22 to A24,
   wherein said front partition wall (103a) comprises a front lower mounting flange (103a2) extending along a front side of said front partition wall (103a), and said rear partition wall (103b) comprises a rear lower mounting flange (103b6) that may extend along a rear side of said rear partition wall (103b).
Aspect A26: Animal transport cage (100) according to aspect A25,
   wherein at least one of said front partition wall (103a) and said rear partition wall (103b) is hingedly coupled to a lower portion of said frame assembly (106) or to said bottom (102) by means of a coupling member (103b2).
Aspect A27: Animal transport cage (100) according to aspect A26,
   wherein at least said rear lower mounting flange (103b6) is pivotably coupled to said rear partition wall (103b),
   wherein said rear lower mounting flange (103b6) may be provided on a pivoting coupling member (103b2) pivotably attached to a lower end portion of said rear partition wall (103b) at a fixation portion (103b4).
Aspect B1: Animal transport cage (1), comprising
   a bottom (102),
   a top (104),
   a frame assembly (106) connecting the bottom to the top, and
   a partition wall assembly (103) for separating an interior space (101) limited by said bottom (102), said top (104) and said frame assembly (106) in a first accommodating space (101a) and a second accommodating space (101b),
   wherein said partition wall assembly (103) is mountable in at least two different positions in said frame assembly (106).
Aspect B2: Animal transport cage (100) according to aspect B1,
   wherein the partition wall assembly (103) is configured to be arrangeable in the frame assembly (106) such that the first accommodating space (101a) has a larger volume than the second accommodating space (101b), the first accommodating space (101a) has a volume equal to the second accommodating space (101b) or the first accommodating space (101a) has a smaller volume than the second accommodating space (101b).
Aspect B3: Animal transport cage (100) according to aspect B1 or aspect B2,
   wherein said partition wall assembly (103) is mountable in said frame assembly (106) in at least two different orientations.
Aspect B4: Animal transport cage (100) according to one of aspects B1 to B3,
   wherein a front portion of said partition wall assembly (103) is fixable at a predetermined position, in particular at a single predetermined position, on the frame assembly front portion (106a), for example by means of a front fixation bracket (600), and
   wherein a rear portion of said partition wall assembly (103) is fixable in at least two different mounting positions, for example at three different mounting positions,
   wherein said mounting positions are provided at different width positions in width direction of said animal transport cage (100) and may be provided by fixation openings (603, 604, 605), for example in a rear fixation bracket (602) for attaching said rear portion of said partition wall assembly (103) to a frame assembly rear portion (106b).
Aspect C1: Animal transport cage (100) comprising
   a top (104),
   a bottom (102), and
   a frame assembly (106) connecting the top and the bottom and defining an interior space together with the top (104) and the bottom (102),
   an access door (148a, 148b) for opening and closing an access opening (146a, 146b) to said interior space, said access door (148a, 148b) being pivotable between an open position in which access to the interior space is granted, and a closed position in which the access opening is blocked by said access door (148a, 148b),
   said access door (148, 148b) comprising an access door locking mechanism (500) configured to lock said access door (148a, 148b) in said closed position,
   wherein said access door locking mechanism (500) is releasable by applying a pulling force on an operating portion (502) in opening direction of said access door (148a, 148b).
Aspect C2: Animal transport cage (100) according to aspect C1,
   wherein said operating portion (502) comprises an operating handle (503) for unlocking the access door, wherein said operating handle (503) is configured pivotable about a handle pivot axis which is substantially parallel to a door hinge axis and/or runs substantially in parallel to a main extension plane of said access door (148a, 148b).
Aspect C3: Animal transport cage (100) according to aspect C2,
   wherein said access door locking mechanism (500) comprises a locking member (504) movable between a locking position in which it protrudes from said access door (148a, 148b) and can engage with said frame assembly (106), and an unlocking position in which said locking member (504) is retracted and cannot engage with said frame assembly (106),
   wherein said locking member (504) may be movable along a straight path, in particular in a direction perpendicular to a pivot axis of said access door (148a, 148b).
Aspect C4: Animal transport cage (100) according to aspect C3,
   wherein said operating handle (502) is operatively coupled to said locking member (504) such that said locking member (504) can be moved from said locking position to said unlocking position by pulling said operating handle (502), and such that said locking member (504) is free to move from said locking position to said unlocking position independent of a position of said operating handle (502).
Aspect C5: Animal transport cage (100) according to aspect C4,
   wherein said locking member (504) is biased towards said locking position by means of an urging member (506), for example a spring biasing means,
   wherein said operating handle (502) comprises a force application portion (510) and said locking member (504) comprises a force receiving surface (512) for receiving a force from said force application portion (510),
   wherein said force application portion (510) is provided on a protrusion (516) protruding into a recess (518) formed in said locking member (504), said force receiving surface (512) being provided by a wall limiting said recess (518) on one side.
Aspect D1: Animal transport cage (100) suitable for use for transportation of an animal in a vehicle, said animal transport cage (100) comprising:
   a bottom (102),
   a top (104),
   a frame assembly (106) connecting the bottom (102) to the top (104), the frame assembly (106) comprising a front portion (106a) and a rear portion (106b),
   at least one animal evacuation hatch (160) configured to allow extraction of the animal in case of an emergency, the animal evacuation hatch (160) comprising a latching arrangement
   (162) being configured to secure the evacuation hatch (160) in relation to the frame assembly (106) such that the evacuation hatch (160) can be locked in place automatically by the latching arrangement (162) when brought into a predetermined position in relation to the frame assembly (106) and can be easily released in case of an emergency.
Aspect D2: Animal transport cage (100) according to aspect D1,
   wherein the latching arrangement (162) comprises a first latching arrangement (162.1) and a second latching arrangement (162.2) arranged at opposite lateral sides of the evacuation hatch (160).
Aspect D3: Animal transport cage (100) according to aspect D1 or D2,
   further comprising a third latching arrangement (162.3) arranged at an upper end portion of the evacuation hatch (160).
Aspect D4: Animal transport cage (100) according to one of aspects D1 to D3,
   wherein at least one latching arrangement (162) is configured to engage with said rear portion (106b) of said frame assembly (106).
Aspect D5: Animal transport cage (100) according to one of aspects D3 and D4 in combination with D3,
   wherein said third latching arrangement (162.3) engages at a position of a rear fixation bracket (602) that is configured to connect an upper portion of a rear upper frame member of the frame assembly rear portion (106b) with a partition wall assembly (103), and/or
   wherein said rear fixation bracket (602) may optionally comprise one or more openings (603, 604, 605) for fixing a rear upper portion of a partition wall assembly (103) to said frame assembly rear portion (106b) at different positions, and/or
   wherein said rear fixation bracket (602) may be configured with abutment sections (606, 608) protruding into said frame assembly rear portion (106b) and forming abutments for said evacuation hatch (160), wherein said rear fixation bracket (602) defines a receiving section
   (610) for said third latching arrangement (162.3) between said abutment sections (606, 608), wherein said receiving section (610) may be provided by a recess formed in said rear fixation bracket (602), for example such that said latching arrangement (162.3), in particular a latching member (164) of said latching arrangement (162.3) may contact said frame assembly (106).
Aspect E1: Animal transport cage (100) suitable for use for transportation of an animal in a vehicle, said animal transport cage (100) comprising:
   a bottom (102),
   a top (104),
   a frame assembly (106) connecting the bottom (102) to the top (104), the frame assembly (106) comprising a front portion (106a) and a rear portion (106b),
   at least one animal evacuation hatch (160) configured to allow extraction of the animal in case of emergency,
   a lower panel (172) arranged below said animal evacuation hatch (160) and coupled to said frame assembly (106),
   wherein a reinforcing member (173) is attached to said lower panel (172).
Aspect E2: Animal transport cage (100) according to aspect E1,
   wherein said lower panel (172) comprises an upper edge portion (172a) configured to be coupled to said animal evacuation hatch (160),
   wherein said reinforcing member (173) is arranged on top or below the upper edge portion (172a) and/or is attached to an upper side of said upper edge portion (172a) or a lower side of said upper edge portion (172a).
Aspect E3: Animal transport cage (100) according to aspect E2,
   said upper edge portion (172a) comprising a folded end portion (172b) being folded along at least one fold line, and
   wherein said reinforcing member (173) is attached to said folded end portion (172b), for example via fixation openings (172c) provided at a distance from said fold line.
Aspect E4: Animal transport cage (100) according to aspect E3
   wherein said reinforcing member (173) may be at least partially formed, for example bent, corresponding to said folded end portion (172b), in particular such that portions of said folded end portion (172b) on opposite sides of one fold line of said at least one fold line are reinforced by said reinforcing member (173).
Aspect E5: Animal transport cage (100) according to aspect E3 or E4,
   wherein said folded end portion (172b) is folded in the same direction at two fold lines, and
   wherein said reinforcing member (173) is accommodated in an accommodating space created by said folded end portion (172b).
Aspect E6: Animal transport cage (100) according to one of aspects E2 to E5,
   wherein said evacuation hatch (160) comprises a lower edge (170),
   wherein said lower edge (170) is configured engageable with said upper edge portion (172a),
   wherein said lower edge (170) may comprise hooks (171) and said upper edge portion (172a) may comprise openings (172a1) for receiving said hooks (171).
Aspect E7: Animal transport cage (100) according to one of aspects E2 to E6,
   wherein said folded end portion (172b) comprises two straight sections folded so as to extend at an angle with respect to each other,
   wherein said reinforcing member (173) is correspondingly formed to comprise two straight sections that may be connected to the straight sections of the folded end portion (172b).
Aspect E8: Animal transport cage (100) according to one of aspects E1 to E7,
   wherein said reinforcing member (173) is a metal sheet or metal plate.
Aspect E9: Animal transport cage (100) according to one of aspects E1 to E8,
   wherein the animal evacuation hatch (160) comprises a latching arrangement (162) being configured to secure the evacuation hatch (160) in relation to the frame assembly (106) such that the evacuation hatch (160) can be locked in place automatically by the latching arrangement (162) when brought into a predetermined position in relation to the frame assembly (106).
Aspect F1: Animal transport cage (100), comprising
   a bottom (102),
   a top (104),
   a frame assembly (106) connecting the bottom to the top, and
   a partition wall assembly (103) for separating an interior space (101) limited by said bottom (102), said top (104) and said frame assembly (106) in a first accommodating space (101a) and a second accommodating space (101b),
   said partition wall assembly (103) comprising a front partition wall (103a) and a rear partition wall (103b) arranged in an overlapping manner and displaceably coupled to each other so as to be movable relative to and along each other between an extended configuration and a retracted configuration,
   wherein at least one of said front partition wall (103a) and said rear partition wall (103b) is hingedly coupled to a lower end of said frame assembly (106) or to said bottom (102) by means of a coupling member (103b2).
Aspect F2: Animal transport cage (100) according to aspect F1,
   wherein said coupling member (103b2) is coupled to a lower portion of said partition wall assembly (103), for example to a lower rear portion of said rear partition wall (103b), pivotable about a coupling member pivot axis (A5), and is fixedly and non-pivotably coupled to said lower portion of said frame assembly (106) or to said bottom (102), wherein said coupling member pivot axis (A5) may extend in width direction of said animal transport cage (100) and may extend in parallel with the bottom (102), and/or
   wherein said coupling member (103b2) comprises a fixation flange (103b6) extending in width direction of said animal transport cage (1), in particular in parallel to said lower portion of said frame assembly (106) or in parallel to a wall portion of said bottom (102), for example in parallel to an edge portion (102b1) of a rear bottom portion (102b), wherein said edge portion (102b1) may be a portion of said bottom (102) that is folded upwards.
Aspect G1: Animal transport cage (100), comprising
   a bottom (102),
   a top (104),
   a frame assembly (106) connecting the bottom to the top, and
   a partition wall assembly (103) for separating an interior space (101) limited by said bottom (102), said top (104) and said frame assembly (106) in a first accommodating space (101a) and a second accommodating space (101b),
   said partition wall assembly (103) comprising a front partition wall (103a) and a rear partition wall (103b) arranged in an overlapping manner and displaceably coupled to each other so as to be movable relative to and along each other between an extended configuration and a retracted configuration,
   further comprising at least one glide member (701, 702) fixedly attached to a lower end of said front partition wall (103a) or said rear partition wall (103b) and configured to lower friction between said front partition wall (103a) and said rear partition wall (103b) and/or between said front partition wall (103a) or said rear partition wall (103b) and said bottom (102).
Aspect G2: Animal transport cage (100) according to aspect G1,
   wherein said glide member (701, 702) is configured as an edge protection member provided on a lower forward end of said rear partition wall (103b) or on a lower rear end of said front partition wall (103a).
Aspect G3: Animal transport cage (100) according to aspect G1,
   wherein said glide member (701) is configured as a bracket extending over lower edge portions of said front partition wall (103a) and of said rear partition wall (103b),
   wherein said glide member (701) may comprise a first recess (701a) for accommodating a lower edge portion of said rear partition wall (103b) and a second recess (701b) for accommodating a lower edge portion of said front partition wall (103a), a wall portion (701c) between said first recess (701a) and said second recess (701b) acting as spacer and/or friction reduction portion between said rear partition wall (103b) and said front partition wall (103a),
   wherein said glide member (701) may be configured as a front protection cover for said rear partition wall (103b).
Aspect G4: Animal transport cage (100) according to aspect G1 or G3,
   wherein said glide member (701) comprises a contact portion (701d) for contacting said bottom (102), in particular for contacting a front bottom portion (102a), wherein said contact portion (701d) may be provided by a protrusion on said glide member (701), wherein said contact portion (701d) may have a reduced width compared to adjacent portions of said glide member (701), wherein said contact portion (701d) may be an elongated protrusion extending in parallel with said front partition wall (103a) and said rear partition wall (103b).
Aspect G5: Animal transport cage (100) according to aspect G2,
   wherein said glide member (702) is configured as a rear protection cover for said front partition wall (103a), and/or
   wherein said glide member (702) is attached only to said front partition wall (103a), and/or
   wherein said glide member (702) comprises only a single recess (702a) for accommodating said lower rear end of said front partition wall (103a), and/or
   wherein a sidewall (702b) of said glide member (702) is arranged between said front partition wall (103a) and said rear partition wall (103b) and acts as a spacer and/or friction reduction portion between said rear partition wall (103b) and said front partition wall (103a).

**REFERENCE SIGNS**

| | | | |
|---|---|---|---|
| | | 107a1 | Hollow end portion of side member |
| 100 | Animal transport cage | 107a2 | End surface portion of side member |
| 101 | Interior space | 107b | Side member |
| 101a | First accommodating space | 107c | Inner surface of side member |
| 101b | Second accommodating space | 108 | Resistance altering element |
| 102 | Bottom | 109 | Opening in connecting portion |
| 102a | Front bottom portion | 110 | Telescopic elements |
| 102a1 | Front end of front bottom portion | 110a | Front telescopic portion |
| 102a2 | Front lower mounting flange | 110b | Rear telescopic portion |
| 102b | Rear bottom portion | 112 | Longitudinal bottom track |
| 102b1 | Rear end of rear bottom portion | 114 | Bottom track member |
| 102b2 | Edge portion of rear bottom portion | 146a | (Left) access opening |
| 102c | Bottom floor | 146b | (Right) access opening |
| 103 | Partition wall assembly | 148a | (Left) access door |
| 103a | Front partition wall | 148b | (Right) access door |
| 103a1 | Fixation opening in front partition wall | 160 | Animal evacuation hatch |
| | | 162 | Latching arrangement |
| 103a2 | Front lower mounting flange | 162.1 | First latching arrangement |
| 103a3 | Upper front partition wall sliding track | 162.2 | Second latching arrangement |
| 103a4 | Lower front partition wall sliding track | 162.3 | Third latching arrangement |
| 103b | Rear partition wall | 164 | Latching pin |
| 103b1 | Fixation opening in rear partition wall | 170 | Lower edge of evacuation hatch |
| 103b2 | Coupling member | 171 | Hook |
| 103b3 | Attachment bracket | 172 | Lower panel |
| 103b4 | Fixation portion | 172a | Upper edge portion of lower panel |
| 103b5 | Fixation opening | 172a1 | Openings in upper edge portion |
| 103b6 | Rear lower mounting flange | 172b | Folded end portion |
| 103b7 | Attachment bracket mounting opening | 172c | Fixation openings |
| | | 173 | Reinforcing member |
| 103b8 | Upper rear partition wall sliding track | 200 | Side member coupling arrangement |
| 103b9 | Lower rear partition wall sliding track | 202 | Holder |
| 103b10 | Sliding portion | 204 | Attachment portion |
| 103c | Upper end of partition wall assembly | 206 | Coupling portion |
| 103d | Lower end of partition wall assembly | 208 | Contact surface |
| 104 | Top | 210 | Base portion |
| 104a | Front top portion | 212 | First fixation section |
| 104a1 | First top opening | 214 | Second fixation section |
| 104a2 | Front end of front top portion | 216 | Hook portion |
| 104b | Rear top portion | 250 | Coupling member |
| 104b1 | Rear end of rear top portion | 300 | Cover portion |
| 104b2 | Second top opening | 302 | Sleeve portion |
| 104b3 | Third top opening | 306 | Supporting portion |
| 104b4 | Fourth top opening | 401 | (Upper) guiding arrangement |
| 106 | Frame assembly | 402 | (Lower) guiding arrangement |
| 106a | Front portion of frame assembly | 403 | Front partition wall track (upper) |
| 106a1 | Top member of frame assembly front portion | 404 | Front partition wall track (lower) |
| | | 403a | Front track end |
| 106a2 | Lower member of frame assemblyront portionf | 403b | Rear track end |
| | | 404a | Front track end |
| 106b | Rear portion of frame assembly | 404b | Rear track end |
| 106b1 | Top member of frame assembly rear portion | 405 | Rear partition wall track (upper) |
| | | 405a | Forward track end |
| 106b2 | Lower member of frame assembly rear poportion | 405b | Rearward track end |
| | | 406 | Rear partition wall track (lower) |
| 107 | Side members | 406a | Forward track end |
| 107a | End portion of side member | 406b | Rearward track end |
| 410 | Wall portion coupling unit | 605 | Fixation opening |
| 410a | Opening in wall portion coupling unit | 606 | Abutment section |
| 411 | Support portion | 608 | Abutment section |
| 412 | Support portion | 610 | Receiving section |
| 413 | Support surface | 613 | Fixation opening |
| 414 | Support surface | 614 | Fixation opening |
| 415 | Friction reducing material / felt | 615 | Fixation opening |
| 416 | Friction reducing material / felt | 701 | Glide member |
| 417 | Central protrusion | 701a | First recess |
| 418 | Central protrusion | 701b | Second recess |
| 419 | Connecting member / rivet | 701c | Wall portion |
| 500 | Access door locking mechanism | 701d | Contact portion |
| 502 | Operating portion | 702 | Glide member |
| 503 | Operating handle | 702a | Recess |
| 504 | Locking member | 702b | Sidewall |
| 506 | Urging member | 800 | Partition wall coupling arrangement |
| 510 | Force application portion | A | Pivot axis |
| 512 | Force receiving surface | A5 | Coupling member pivot axis |
| 516 | Protrusion | L | Longitudinal direction |
| 518 | Recess | M1 | Upper mounting flange |
| 600 | Front fixation bracket | M2 | Upper mounting flange |
| 601 | Fixation opening | M3 | Lower mounting flange |
| 602 | Rear fixation bracket | M4 | Lower mounting flange |
| 603 | Fixation opening | R | Rotational direction |
| 604 | Fixation opening | | |

## Claims

1. Animal transport cage (100), comprising
a bottom (102),
a top (104),
a frame assembly (106) connecting the bottom (102) to the top (104), and
a partition wall assembly (103) for separating an interior space (101) limited by said bottom (102), said top (104) and said frame assembly (106) in a first accommodating space (101a) and a second accommodating space (101b),
said partition wall assembly (103) comprising a front partition wall (103a) and a rear partition wall (103b) arranged in an overlapping manner and displaceably coupled to each other so as to be movable relative to and along each other between at least an extended configuration and a retracted configuration,
wherein said front partition wall (103a) and said rear partition wall (103b) are coupled to each other by at least one guiding arrangement (401, 402), for example by at least two guiding arrangements (401, 402), such that the front partition wall (103a) and the rear partition wall (103b) are configured to be moveable along a longitudinal direction (L).

2. Animal transport cage (100) according to claim 1,
wherein said front partition wall (103a) and said rear partition wall (103b) are coupled to each other by said at least one guiding arrangement (401, 402) such that the front partition wall (103a) and the rear partition wall (103b) are configured to be moveable along a rotational direction (R) to each other.

3. Animal transport cage (100) according to claim 1 or 2,
wherein each guiding arrangement (401, 402) comprises a front partition wall track (403, 404) provided on said front partition wall (103a), a rear partition wall track (405, 406) provided on said rear partition wall (103b), and a wall portion coupling unit (410) slidably received in said front partition wall track (403, 404) and said rear partition wall track (405, 406) and coupling said front partition wall (103a) and said rear partition wall (103b) to each other,
and/or
wherein the form of said front partition wall track (403, 404) and the form of said rear partition wall track (405, 406) are different,
and/or
wherein said front partition wall track (403, 404) and said rear partition wall track (405, 406) are formed as recesses or slots provided in said front partition wall (103a) and said rear partition wall (103b), for example as slots having a constant width,
and/or
wherein in each guiding arrangement (401, 402) said front partition wall track (403, 404) extends in depth direction of said animal transport cage (100) or in front-to-rear direction of the front partition wall (103a), in particular only at a constant height and/or in parallel with a bottom floor (102c) of said bottom (102) and/or horizontally, and/or
wherein said rear partition wall track (405, 406) extends in a direction which is different from the extension direction of the front partition wall track,
and/or
wherein said front partition wall track (403, 404) comprises a front track end (403a, 404a) and a rear track end (403b, 404b) arranged at the same height position, and/or
wherein said front partition wall track (403, 404) is straight,

4. Animal transport cage (100) according to one of claim 3,
wherein said rear partition wall track (405, 406) comprises a forward track end (405a, 406a) and a rearward track end (405b, 406b),
wherein said forward track end (405a, 406a) and said rearward track end (405b, 406b) are arranged at different height positions, and/or
wherein said forward track end (405a, 406a) and said rearward track end (405b, 406b) are arranged at different positions in depth direction, and/or
wherein said forward track end (405a, 406a) is positioned below said rearward track end (405b, 406b), and/or
wherein said rear partition wall track (405, 406) is curved, for example arc-shaped with a predetermined centerline arc radius, for example such that an arc center is located below the centerline arc on said rear partition wall (103b).

5. Animal transport cage (100) according to one of claims 3 or **4,**
wherein said wall portion coupling unit (410) comprises two rigid support portions (411, 412) with support surfaces (413, 414) facing towards each other,
wherein said support portions (411, 412) are coupled to each other such that said support surfaces (413, 414) are arranged at a predetermined distance from each other,
wherein a friction reducing material (415, 416) and/or a noise reducing material, for example a felt, may be applied on said support surfaces (413, 414),
wherein said support portions (411, 412) may comprise a metal sheet,
wherein said support portions (411, 412) may be plate-shaped or disc-shaped, for example each with a central protrusion (417, 418) protruding towards the other support portion, said central protrusions (417, 418) being configured to contact each other and to provide said predetermined distance between said support surfaces (413, 414),
wherein said support portions (411, 412) may be coupled to each other by a connecting member (419), for example a rivet,
wherein said central protrusions (417, 418) may comprise an opening (410a) such that support portions (411, 412) may be coupled to each other by said connecting member (419),
and/or
wherein said support surfaces (413, 414) are arranged at a distance being larger than the sum of the thicknesses of said front partition wall (103a) and said rear partition wall (103b) to allow a sliding movement of said wall portion coupling unit (410) relative to said front partition wall (103a) and said rear partition wall (103b).

6. Animal transport cage (100) according to one of claims 1 to 5,
wherein said frame assembly (106) comprises a front portion (106a), a rear portion (106b), and one or more side members (107) forming at least a portion of a side boundary of said animal transport cage (100) and connecting said front portion (106a) and said rear portion (106b),
wherein each side member (107) is coupled to said front portion (106a) and said rear portion (106b) to allow a defined relative movement between said side member (107) and said front portion (106a) and said rear portion (106b),
and/or
wherein said partition wall assembly (103) is configured such that said front partition wall (103a) and said rear partition wall (103b) are able to at least partially follow a movement of said front portion (106a) and said rear portion (106b) by moving relative to each other without deformation of said front partition wall (103a) or said rear partition wall (103b),
and/or
wherein each side member (107) is a telescopic element extending between the front portion (106a) and the rear portion (106b),
and/or
wherein the side member (107) and the partition wall assembly (103) are configured to be adjustable in longitudinal direction (L) such that the depth of the animal transport cage (100) is adjustable by displacing the front partition wall (103a) and the rear partition wall (103b) relative to each other and by telescoping the side member (107),
and/or
wherein the front partition wall (103a) and the rear partition wall (103b) are configured to be movable in the longitudinal direction (L) relative to each other when at least one resistance altering element (108) having at least one pre-set force state for altering a longitudinal force required for relative movement of the front (106a) and rear portion (106b) in the longitudinal direction (L) is released,
and/or
wherein the resistance altering element (108) is provided on at least one side member (107) and/or on the partition wall assembly (103),
and/or
wherein, in a use configuration, said animal transport cage (100) is configured to be dimensionally stable as long as a force acting on the animal transport cage (100) is lower than a predetermined force, and, when said force is higher than said predetermined force, to at least partially vary in shape through a relative movement, in particular a translatory and/or rotatory movement, of adjacent portions of said frame assembly (106), said bottom (102), said top (104) and/or said partition wall assembly (103) with respect to each other,
and/or
wherein when a force acting on the animal transport cage (100) is higher than a predetermined force,
translatory movement of the front portion (106a) and the rear portion (106b) relative to each other is obtained by:
- overcoming the pre-set force state of the at least one resistance altering element (108) restricting relative movement of the front (106a) and the rear portion (106b) in the longitudinal direction (L) such that the side member (107) is allowed to telescope and the front partition wall (103a) and the rear partition wall (103b) are allowed to displace relative to each other along the straight front partition wall track (403, 404),
and/or
rotational movement of the front portion (106a) and the rear portion (106b) relative to each other is obtained by:
- the side member (107) and the front portion (106a) and/or the side member (107) and the rear portion (106b) being rotatably displaceable relative to each other, and/or
- the front partition wall (103a) and the front portion (106a) being rotatably displaceable relative to each other and/or the rear partition wall (103b) and the rear portion (106b) being rotatably displaceable relative to each other, and/or
- the front partition wall (103a) and the rear partition wall (103b) being displaceable relative to each other.

7. Animal transport cage (100) according to one of claim 6,
wherein said front partition wall (103a) is coupled to the bottom (102), for example to a flange provided in a front bottom portion (102a), or is coupled to the front portion (106a) of the frame assembly (106), and the rear partition wall (103b) is coupled to the bottom (102), for example to a flange provided in a rear bottom portion (102b), or to the rear portion (106b) of the frame assembly (106) by means of a partition wall coupling arrangement (800) configured to hold the front partition wall (103a) spaced apart from and rotatable with respect to the front portion (106a) and/or the rear partition wall (103b) spaced apart from and rotatable with respect to the rear portion (106b).

8. Animal transport cage (100) according to one of claims 1 to 7,
wherein said partition wall assembly (103) is held within said animal transport cage (100) only at an upper end (103c) and a lower end (103d) of said partition wall assembly (103) and/or only at an upper end and a lower end of said animal transport cage (100), and/or
wherein said partition wall assembly (103) is held only at corner portions of said partition wall assembly (103), and/or
wherein said front partition wall (103a) is coupled to said top (104), in particular to a front end (104a2) of a front top portion (104a), and/or to a top member (106a1) of said frame assembly front portion (106a), and to a lower member (106a2), in particular lowermost crossmember, of said frame assembly front portion (106a) or to a front portion (102a) of said bottom (102), in particular a front end (102a1) of a front bottom portion (102a) or to a flange on the front bottom portion (102a), which flange may be provided by an upwardly bent edge portion of said front bottom portion (102a), for example at the front end (102a1),
wherein said rear partition wall (103b) is coupled to said top (104), in particular to a rear end (104b1) of a rear top portion (104b), and/or to a top member (106b1) of said frame assembly rear portion (106b), and to a lower member (106b2), in particular lowermost crossmember, of said frame assembly rear portion (106b) or to a rear portion of said bottom (102), in particular a rear end (102b1) of a rear bottom portion (102b) or to a flange on the rear bottom portion (102b), which flange may be provided by an upwardly bent edge portion of said rear bottom portion (102b), for example at the rear end (102b1).

9. Animal transport cage (100) according to claim 8,
wherein said front partition wall (103a) and said rear partition wall (103b) each comprise an upper mounting flange (M1, M2) extending along said top (104) at their upper ends and each with an upper surface facing said top (104),
wherein said upper mounting flanges (M1, M2) may be provided by bent upper end portions of said front partition wall (103a) and said rear partition wall (103b),
wherein each mounting flange (M1, M2) may comprise a fixation opening (103a1, 103b1), for example a threaded opening.

10. Animal transport cage (100) according to claim 8 or claim 9,
wherein said front partition wall (103a) comprises a front lower mounting flange (103a2) extending along a front side of said front partition wall (103a), and said rear partition wall (103b) comprises a rear lower mounting flange (103b6) that may extend along a rear side of said rear partition wall (103b),
and/or
wherein at least one of said front partition wall (103a) and said rear partition wall (103b) is hingedly coupled to a lower portion of said frame assembly (106) or to said bottom (102) by means of a coupling member (103b2).

11. Animal transport cage (100) according to claim 10,
wherein at least said rear lower mounting flange (103b6) is pivotably coupled to said rear partition wall (103b),
wherein said rear lower mounting flange (103b6) may be provided on a pivoting coupling member (103b2) pivotably attached to a lower end portion of said rear partition wall (103b) at a fixation portion (103b4).

12. Animal transport cage (100) according to one of the preceding claims,
further comprising at least one glide member (701, 702) fixedly attached to a lower end of said front partition wall (103a) or said rear partition wall (103b) and configured to lower friction between said front partition wall (103a) and said rear partition wall (103b) and/or between said front partition wall (103a) or said rear partition wall (103b) and said bottom (102),
wherein said glide member (701, 702) may be configured as an edge protection member provided on a lower forward end of said rear partition wall (103b) or on a lower rear end of said front partition wall (103a).

13. Animal transport cage (100) according to claim 12,
wherein said glide member (701) is configured as a bracket extending over lower edge portions of said front partition wall (103a) and of said rear partition wall (103b),
wherein said glide member (701) may comprise a first recess (701a) for accommodating a lower edge portion of said rear partition wall (103b) and a second recess (701b) for accommodating a lower edge portion of said front partition wall (103a), a wall portion (701c) between said first recess (701a) and said second recess (701b) acting as spacer and/or friction reduction portion between said rear partition wall (103b) and said front partition wall (103a), wherein said glide member (701) may be configured as a front protection cover for said rear partition wall (103b),
wherein said glide member (701) may comprise a contact portion (701d) for contacting said bottom (102), in particular for contacting a front bottom portion (102a), wherein said contact portion (701d) may be provided by a protrusion on said glide member (701), wherein said contact portion (701d) may have a reduced width compared to adjacent portions of said glide member (701), wherein said contact portion (701d) may be an elongated protrusion extending in parallel with said front partition wall (103a) and said rear partition wall (103b),
or
wherein said glide member (702) is configured as a rear protection cover for said front partition wall (103a), and/or
wherein said glide member (702) is attached only to said front partition wall (103a), and/or
wherein said glide member (702) comprises only a single recess (702a) for accommodating said lower rear end of said front partition wall (103a), and/or
wherein a sidewall (702b) of said glide member (702) is arranged between said front partition wall (103a) and said rear partition wall (103b) and acts as a spacer and/or friction reduction portion between said rear partition wall (103b) and said front partition wall (103a).

14. Animal transport cage (100) according to one of the preceding claims,
wherein said partition wall assembly (103) is mountable in at least two different positions in said frame assembly (106),
wherein the partition wall assembly (103) may be configured to be arrangeable in the frame assembly (106) such that the first accommodating space (101a) has a larger volume than the second accommodating space (101b), the first accommodating space (101a) has a volume equal to the second accommodating space (101b) or the first accommodating space (101a) has a smaller volume than the second accommodating space (101b),
wherein said partition wall assembly (103) may be mountable in said frame assembly (106) in at least two different orientations.

15. Animal transport cage (100) according to claim 14,
wherein a front portion of said partition wall assembly (103) is fixable at a predetermined position, in particular at a single predetermined position, on the frame assembly front portion (106a), for example by means of a front fixation bracket (600), and
wherein a rear portion of said partition wall assembly (103) is fixable in at least two different mounting positions, for example at three different mounting positions,
wherein said mounting positions are provided at different width positions in width direction of said animal transport cage (100) and may be provided by fixation openings (603, 604, 605), for example in a rear fixation bracket (602) for attaching said rear portion of said partition wall assembly (103) to a frame assembly rear portion (106b).
